(19) Europäisches Patentamt
European Patent Office
Office européen des brevets

(11) **EP 4 760 471 A1**

(12) **EUROPEAN PATENT APPLICATION**
published in accordance with Art. 153(4) EPC

(43) Date of publication:
**17.06.2026   Bulletin 2026/25**

(51) International Patent Classification (IPC):
*G06F 3/04845* *(2022.01)*

(21) Application number: 24850988.7

(22) Date of filing: **06.08.2024**

(86) International application number:
**PCT/CN2024/110018**

(87) International publication number:
**WO 2025/031343 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023   CN 202311012164**

(71) Applicant: HUAWEI TECHNOLOGIES CO., LTD.
**Shenzhen 518129 (CN)**

(72) Inventors:
• **LI, Fan**
  **Shenzhen, Guangdong 518129 (CN)**
• **LIU, Jianzhuang**
  **Shenzhen, Guangdong 518129 (CN)**
• **PEI, Renjing**
  **Shenzhen, Guangdong 518129 (CN)**
• **SHAO, Bin**
  **Shenzhen, Guangdong 518129 (CN)**

(74) Representative: **Thun, Clemens
Mitscherlich PartmbB
Karlstraße 7
80333 München (DE)**

(54) **IMAGE PROCESSING METHOD AND RELATED DEVICE**

(57)    This application discloses an image processing method and a related device. A model used in this application can correctly understand an image generation intention of a user, so that a target image finally output by the model is a correct image, thereby meeting a requirement of the user. The method in this application includes: When the user needs to generate the target image, a plurality of reference images and a first processing instruction for the plurality of reference images may be first obtained from the user. The first processing instruction indicates the target image. Then, the first processing instruction may be adjusted by using the plurality of reference images, to obtain a second processing instruction. The second processing instruction indicates a relationship between at least one reference image in the plurality of reference images and the target image. Finally, the second processing instruction may be input into a target model, so that the target model processes the at least one reference image by using the second processing instruction, to obtain and output the target image, and provide the target image for the user for viewing and use.

[FIG. 5]

Obtain a plurality of reference images and a first processing instruction for the plurality of reference images, where the first processing instruction indicates a target image — 501

Adjust the first processing instruction based on the plurality of reference images to obtain a second processing instruction, where the second processing instruction indicates a relationship between at least one reference image in the plurality of reference images and the target image — 502

Process the at least one reference image based on the second processing instruction by using a target model, to obtain the target image — 503

**EP 4 760 471 A1**

## Description

This application claims priority to Chinese Patent Application No. 202311012164.1, filed with the China National Intellectual Property Administration on August 10, 2023 and entitled "IMAGE PROCESSING METHOD AND RELATED DEVICE THEREOF", which is incorporated herein by reference in its entirety.

## TECHNICAL FIELD

Embodiments of this application relate to artificial intelligence (artificial intelligence, AI) technologies, and in particular, to an image processing method and a related device thereof.

## BACKGROUND

An image controllable generation task is a typical task in computer vision. The task usually means generating, by a neural network model, an image required by a user under guidance provided by the user.

In the related technology, when the user needs to generate the image, the user may input, to the neural network model an image processing instruction and an image used to guide the model. The image processing instruction indicates a target image required by the user. After obtaining the image processing instruction and the image, the neural network model may perform feature extraction on the image, to obtain an image feature. Then, the neural network model may use the image feature as a guide signal, to guide an encoding process for the image processing instruction, to obtain the target image through encoding, and return the target image to the user for viewing and use.

In the foregoing process, because the image processing instruction and the image used to guide the model are independent of each other, the neural network model may misunderstand guidance of the user (that is, an image generation intention of the user). As a result, the target image generated by the neural network model is not a correct image, and cannot meet a requirement of the user.

## SUMMARY

Embodiments of this application provide an image processing method and a related device thereof. A model used in this application can correctly understand an image generation intention of a user, so that a target image finally output by the model is a correct image, thereby meeting a requirement of the user.

A first aspect of embodiments of this application provides an image processing method. The method includes: When a user needs to generate a target image, an interface may be provided for the user. The user may input a plurality of reference images and a first processing instruction for the plurality of reference images into the interface. The first processing instruction indicates a target image required by the user. In this way, the plurality of reference images and the first processing instruction that are input by the user may be received through the interface.

After obtaining the plurality of reference images and the first processing instruction, the first processing instruction may be adjusted by using the plurality of reference images, to obtain a second processing instruction. The second processing instruction indicates a relationship between at least one reference image in the plurality of reference images and the target image. For example, the second processing instruction indicates that the target image is obtained by fusing the plurality of reference images. For another example, the second processing instruction indicates that the target image is obtained by converting a reference image.

After the second processing instruction is obtained, the second processing instruction may be input into a target model, so that the target model processes the at least one reference image based on the second processing instruction, to obtain and output the target image, and provide the target image for the user for viewing and use.

It can be learned from the foregoing method that when the user needs to generate a target image, a plurality of reference images and a first processing instruction for the plurality of reference images may be first obtained from the user. The first processing instruction indicates the target image. Then, the first processing instruction may be adjusted by using the plurality of reference images, to obtain a second processing instruction. The second processing instruction indicates a relationship between at least one reference image in the plurality of reference images and the target image. Finally, the second processing instruction may be input into a target model, so that the target model processes the at least one reference image by using the second processing instruction, to obtain and output the target image, and provide the target image for the user for viewing and use. In the foregoing process, because the second processing instruction is obtained based on the plurality of reference images and the first processing instruction, when processing the at least one reference image in the plurality of reference images by using the second processing instruction, the target model may not only consider content of the at least one reference image in the plurality of reference images and content of the target image, but also consider a relationship between the content of the at least one image and the content of the target image. Factors considered are comprehensive. In this way, the target model can correctly understand an image generation intention of the user, so that a finally output target image is a correct image, thereby meeting a requirement of the user.

In a possible implementation, the method further includes: obtaining a plurality of reference texts, where the plurality of reference texts are used to describe the plurality of reference images; and adjusting the first processing instruction based on the plurality of reference images, to obtain the second processing instruction includes: adjusting the first processing instruction based on the plurality of reference images and the plurality of reference texts, to obtain the second processing instruction. In the foregoing implementation, the obtained input information not only includes the plurality of reference images and the first processing instruction, but also includes the plurality of reference texts used to describe the plurality of reference images. Therefore, the plurality of reference images, the first processing instruction, and the plurality of reference texts that are used as the input information can be successfully obtained. In this case, the first processing instruction may be adjusted based on the plurality of reference images and the plurality of reference texts, to obtain the second processing instruction. It can be learned that multi-modal input information can be received, to more accurately complete instruction adjustment, and then more accurately complete image processing based on an adjusted instruction.

In a possible implementation, obtaining the plurality of reference texts includes: obtaining the plurality of reference texts input by a user; performing image recognition on the plurality of reference images to obtain the plurality of reference texts; or performing text extraction on the first processing instruction to obtain the plurality of reference texts. In the foregoing implementation, the plurality of reference texts used to describe the plurality of reference images may be obtained in a plurality of manners. For example, the user inputs not only the plurality of reference images and the first processing instruction into an interface, but also the plurality of reference texts. For another example, the plurality of reference images input by the user are recognized, to obtain the plurality of reference texts. For still another example, the plurality of reference texts are extracted from the first processing instruction input by the user. In this way, the multi-modal input information can be successfully obtained in a plurality of manners.

In a possible implementation, adjusting the first processing instruction based on the plurality of reference images and the plurality of reference texts to obtain the second processing instruction includes: generating a plurality of third processing instructions and a plurality of new reference images based on the plurality of reference images and the plurality of reference texts, where one third processing instruction indicates a relationship between one reference image and one new reference image; and adjusting the first processing instruction based on the plurality of reference images and the plurality of reference texts by using the plurality of third processing instructions as a reference, to obtain the second processing instruction, where the second processing instruction indicates a relationship between the plurality of reference images and the target image. In the foregoing internship manner, after a plurality of image-text pairs (that is, the plurality of reference images and the plurality of reference texts) and the first processing instruction are obtained, for any one of the plurality of image-text pairs, one question-answer pair may be generated by using one reference image and one reference text that are included in the image-text pair. The question-answer pair includes one third processing instruction (that is, a question) and one new reference image (that is, an answer). The third processing instruction indicates a relationship between the reference image in the image-text pair and the new reference image in the question-answer pair. For another image-text pair in the plurality of image-text pairs, a similar operation may be performed on the another image-text pair. Therefore, finally, a plurality of question-answer pairs may be obtained. The plurality of question-answer pairs include a plurality of third processing instructions and a plurality of new reference images. After the plurality of question-answer pairs are obtained, that is, after the plurality of third processing instructions and the plurality of new reference images are obtained, the first processing instruction is adjusted by using the plurality of reference images and the plurality of reference texts and by using the plurality of third processing instructions as a reference, to obtain the second processing instruction. The second processing instruction indicates a relationship between the plurality of reference images and the target image. In other words, the second processing instruction indicates that the target image is obtained by fusing the plurality of reference images.

In a possible implementation, processing the at least one reference image based on the second processing instruction by using the target model, to obtain the target image includes: fusing the plurality of reference images based on the second processing instruction by using the target model and by using the plurality of third processing instructions and the plurality of new reference images as a reference, to obtain the target image. In the foregoing implementation, input of the target model includes the plurality of third processing instructions, the plurality of new reference images, and the second processing instruction. Therefore, the target model may perform fusing on the plurality of reference images based on the second processing instruction by using the plurality of third processing instructions and the plurality of new reference images as a reference, to accurately obtain the target image.

In a possible implementation, the plurality of reference images include a first image, a second image, and a third image, the plurality of reference texts include a first text used to describe the first image, a second text used to describe the second image, and a third text used to describe the third image, and adjusting the first processing instruction based on the plurality of reference images and the plurality of reference texts to obtain the second processing instruction includes: generating a fourth processing instruction and the second image based on the first image, the first text, and the second text, where the fourth processing instruction indicates a relationship between the first image and the second image; and

adjusting the first processing instruction based on the third image and the third text by using the fourth processing instruction as a reference, to obtain the second processing instruction, where the second processing instruction indicates a relationship between the third image and the target image. In the foregoing implementation, the plurality of image-text pairs include a first image-text pair, a second image-text pair, and a third image-text pair. The first image-text pair includes the first image in the plurality of reference images and the first text in the plurality of reference texts. The second image-text pair includes the second image in the plurality of reference images and the second text in the plurality of reference texts. The third image-text pair includes the third image in the plurality of reference images and the third text in the plurality of reference texts. In this case, the first image-text pair and the second image-text pair may be used to generate a question-answer pair. The question-answer pair includes the fourth processing instruction (that is, a question) and the second image (that is, an answer). The fourth processing instruction indicates a relationship between the first image and the second image. After the question-answer pair is obtained, that is, after the fourth processing instruction and the second image are obtained, the first processing instruction may be adjusted by using the third image and the third text and by using the fourth processing instruction as a reference, to obtain the second processing instruction. The second processing instruction indicates a relationship between the third image and the target image. In other words, the second processing instruction indicates that the target image is obtained by converting the third image.

In a possible implementation, processing the at least one reference image based on the second processing instruction by using the target model, to obtain the target image includes: converting the third image based on the second processing instruction by using the target model and by using the fourth processing instruction and the second image as a reference, to obtain the target image. In the foregoing implementation, the input of the target model includes the fourth processing instruction, the second image, and the second processing instruction. The target model may convert the third image based on the second processing instruction by using the fourth processing instruction and the second image as a reference, to accurately obtain the target image.

In a possible implementation, the first processing instruction includes a target text used to generate the target image, the target text includes at least one reference text used to describe the at least one reference image, the second processing instruction includes the target text and the at least one reference image embedded into the target text, and a location of embedding the at least one reference image is a location of the at least one reference text in the target text. In the foregoing implementation, if the user needs to perform image fusion, the target text in the first processing instruction includes the plurality of reference texts. Therefore, the plurality of reference images may be embedded into the target text based on locations of the plurality of reference texts in the target text, to obtain the second processing instruction. If the user needs to perform image conversion, the target text in the first processing instruction includes the third text. Therefore, the third image may be embedded into the target text based on a location of the third text in the target text, to obtain the second processing instruction.

A second aspect of embodiments of this application provides a model training method is provided. The method includes: obtaining a plurality of reference images and a first processing instruction for the plurality of reference images, where the first processing instruction indicates a target image; adjusting the first processing instruction based on the plurality of reference images, to obtain a second processing instruction, where the second processing instruction indicates a relationship between at least one reference image in the plurality of reference images and the target image; process the at least one reference image based on the second processing instruction by using a to-be-trained model, to obtain the target image; training the to-be-trained model based on the target image and a real image, to obtain a target model, where the real image is obtained based on the at least one reference image.

The target model obtained through training in this embodiment of this application has an image processing function. Specifically, when the user needs to generate a target image, a plurality of reference images and a first processing instruction for the plurality of reference images may be first obtained from the user. The first processing instruction indicates the target image. Then, the first processing instruction may be adjusted by using the plurality of reference images, to obtain a second processing instruction. The second processing instruction indicates a relationship between at least one reference image in the plurality of reference images and the target image. Finally, the second processing instruction may be input into a target model, so that the target model processes the at least one reference image by using the second processing instruction, to obtain and output the target image, and provide the target image for the user for viewing and use. In the foregoing process, because the second processing instruction is obtained based on the plurality of reference images and the first processing instruction, when processing the at least one reference image in the plurality of reference images by using the second processing instruction, the target model may not only consider content of the at least one reference image in the plurality of reference images and content of the target image, but also consider a relationship between the content of the at least one image and the content of the target image. Factors considered are comprehensive. In this way, the target model can correctly understand an image generation intention of the user, so that a finally output target image is a correct image, thereby meeting a requirement of the user.

In a possible implementation, the method further includes: obtaining a plurality of reference texts, where the plurality of reference texts are used to describe the plurality of reference images; and adjusting the first processing instruction based on the plurality of reference images, to obtain the second processing instruction includes: adjusting the first processing instruction based on the plurality of reference images and the plurality of reference texts, to obtain the second processing instruction.

In a possible implementation, obtaining the plurality of reference texts includes: obtaining the plurality of reference texts input by a user; performing image recognition on the plurality of reference images to obtain the plurality of reference texts; or performing text extraction on the first processing instruction to obtain the plurality of reference texts.

In a possible implementation, adjusting the first processing instruction based on the plurality of reference images and the plurality of reference texts to obtain the second processing instruction includes: generating a plurality of third processing instructions and a plurality of new reference images based on the plurality of reference images and the plurality of reference texts, where one third processing instruction indicates a relationship between one reference image and one new reference image; and adjusting the first processing instruction based on the plurality of reference images and the plurality of reference texts by using the plurality of third processing instructions as a reference, to obtain the second processing instruction, where the second processing instruction indicates a relationship between the plurality of reference images and the target image.

In a possible implementation, processing the at least one reference image based on the second processing instruction by using the to-be-trained model, to obtain the target image includes: fusing the plurality of reference images based on the second processing instruction by using the to-be-trained model and by using the plurality of third processing instructions and the plurality of new reference images as a reference, to obtain the target image.

In a possible implementation, the plurality of reference images include a first image, a second image, and a third image, the plurality of reference texts include a first text used to describe the first image, a second text used to describe the second image, and a third text used to describe the third image, and adjusting the first processing instruction based on the plurality of reference images and the plurality of reference texts to obtain the second processing instruction includes: generating a fourth processing instruction and the second image based on the first image, the first text, and the second text, where the fourth processing instruction indicates a relationship between the first image and the second image; and adjusting the first processing instruction based on the third image and the third text by using the fourth processing instruction as a reference, to obtain the second processing instruction, where the second processing instruction indicates a relationship between the third image and the target image.

In a possible implementation, processing the at least one reference image based on the second processing instruction by using the to-be-trained model, to obtain the target image includes: converting the third image based on the second processing instruction by using the to-be-trained model and by using the fourth processing instruction and the second image as a reference, to obtain the target image.

In a possible implementation, the first processing instruction includes a target text used to generate the target image, the target text includes at least one reference text used to describe the at least one reference image, the second processing instruction includes the target text and the at least one reference image embedded into the target text, and a location of embedding the at least one reference image is a location of the at least one reference text in the target text.

A third aspect of embodiments of this application provides an image processing apparatus. The apparatus includes: an obtaining module, configured to obtain a plurality of reference images and a first processing instruction for the plurality of reference images, where the first processing instruction indicates a target image; an adjustment module, configured to adjust the first processing instruction based on the plurality of reference images, to obtain a second processing instruction, where the second processing instruction indicates a relationship between at least one reference image in the plurality of reference images and the target image; and a processing module, configured to process the at least one reference image based on the second processing instruction by using a target model, to obtain the target image.

In this embodiment of this application, when the user needs to generate a target image, a plurality of reference images and a first processing instruction for the plurality of reference images may be first obtained from the user. The first processing instruction indicates the target image. Then, the first processing instruction may be adjusted by using the plurality of reference images, to obtain a second processing instruction. The second processing instruction indicates a relationship between at least one reference image in the plurality of reference images and the target image. Finally, the second processing instruction may be input into a target model, so that the target model processes the at least one reference image by using the second processing instruction, to obtain and output the target image, and provide the target image for the user for viewing and use. In the foregoing process, because the second processing instruction is obtained based on the plurality of reference images and the first processing instruction, when processing the at least one reference image in the plurality of reference images by using the second processing instruction, the target model may not only consider content of the at least one reference image in the plurality of reference images and content of the target image, but also consider a relationship between the content of the at least one image and the content of the target image. Factors considered are comprehensive. In this way, the target model can correctly understand an image generation intention of the user, so that a finally output target image is a correct image, thereby meeting a requirement of the user.

In a possible implementation, the obtaining module is further configured to obtain a plurality of reference texts, where the plurality of reference texts are used to describe a plurality of reference images; and the adjustment module is configured to adjust the first processing instruction based on the plurality of reference images and the plurality of reference texts, to obtain the second processing instruction.

In a possible implementation, the obtaining module is configured to: obtain the plurality of reference texts input by a user; perform image recognition on the plurality of reference images to obtain the plurality of reference texts; or perform text extraction on the first processing instruction to obtain the plurality of reference texts.

In a possible implementation, the adjustment module is configured to: generate a plurality of third processing instructions and a plurality of new reference images based on the plurality of reference images and the plurality of reference texts, where one third processing instruction indicates a relationship between one reference image and one new reference image; and adjust the first processing instruction based on the plurality of reference images and the plurality of reference texts by using the plurality of third processing instructions as a reference, to obtain the second processing instruction, where the second processing instruction indicates a relationship between the plurality of reference images and the target image.

In a possible implementation, the processing module is configured to: fuse the plurality of reference images based on the second processing instruction by using the target model and by using the plurality of third processing instructions and the plurality of new reference images as a reference, to obtain the target image.

In a possible implementation, the plurality of reference images include a first image, a second image, and a third image, the plurality of reference texts include a first text used to describe the first image, a second text used to describe the second image, and a third text used to describe the third image, and the adjustment module is configured to: generate a fourth processing instruction and the second image based on the first image, the first text, and the second text, where the fourth processing instruction indicates a relationship between the first image and the second image; and adjust the first processing instruction based on the third image and the third text by using the fourth processing instruction as a reference, to obtain the second processing instruction, where the second processing instruction indicates a relationship between the third image and the target image.

In a possible implementation, the processing module is configured to: convert the third image based on the second processing instruction by using the target model and by using the fourth processing instruction and the second image as a reference, to obtain the target image.

In a possible implementation, the first processing instruction includes a target text used to generate the target image, the target text includes at least one reference text used to describe the at least one reference image, the second processing instruction includes the target text and the at least one reference image embedded into the target text, and a location of embedding the at least one reference image is a location of the at least one reference text in the target text.

A fourth aspect of embodiments of this application provides a model training apparatus. The apparatus includes: an obtaining module, configured to obtain a plurality of reference images and a first processing instruction for the plurality of reference images, where the first processing instruction indicates a target image; an adjustment module, configured to adjust the first processing instruction based on the plurality of reference images, to obtain a second processing instruction, where the second processing instruction indicates a relationship between at least one reference image in the plurality of reference images and the target image; a processing module, configured to process the at least one reference image based on the second processing instruction by using a to-be-trained model, to obtain the target image; and a training module, configured to train the to-be-trained model based on the target image and a real image, to obtain a target model, where the real image is obtained based on the at least one reference image.

The target model obtained through training in this embodiment of this application has an image processing function. Specifically, when the user needs to generate a target image, a plurality of reference images and a first processing instruction for the plurality of reference images may be first obtained from the user. The first processing instruction indicates the target image. Then, the first processing instruction may be adjusted by using the plurality of reference images, to obtain a second processing instruction. The second processing instruction indicates a relationship between at least one reference image in the plurality of reference images and the target image. Finally, the second processing instruction may be input into a target model, so that the target model processes the at least one reference image by using the second processing instruction, to obtain and output the target image, and provide the target image for the user for viewing and use. In the foregoing process, because the second processing instruction is obtained based on the plurality of reference images and the first processing instruction, when processing the at least one reference image in the plurality of reference images by using the second processing instruction, the target model may not only consider content of the at least one reference image in the plurality of reference images and content of the target image, but also consider a relationship between the content of the at least one image and the content of the target image. Factors considered are comprehensive. In this way, the target model can correctly understand an image generation intention of the user, so that a finally output target image is a correct image, thereby meeting a requirement of the user.

In a possible implementation, the obtaining module is further configured to obtain a plurality of reference texts, where the plurality of reference texts are used to describe a plurality of reference images; and the adjustment module is configured to adjust the first processing instruction based on the plurality of reference images and the plurality of reference texts, to obtain the second processing instruction.

In a possible implementation, the obtaining module is configured to: obtain the plurality of reference texts input by a user; perform image recognition on the plurality of reference images to obtain the plurality of reference texts; or perform text extraction on the first processing instruction to obtain the plurality of reference texts.

In a possible implementation, the adjustment module is configured to: generate a plurality of third processing instructions and a plurality of new reference images based on the plurality of reference images and the plurality of reference texts, where one third processing instruction indicates a relationship between one reference image and one new reference image; and adjust the first processing instruction based on the plurality of reference images and the plurality of reference texts by using the plurality of third processing instructions as a reference, to obtain the second processing instruction, where the second processing instruction indicates a relationship between the plurality of reference images and the target image.

In a possible implementation, the processing module is configured to: fuse the plurality of reference images based on the second processing instruction by using the to-be-trained model and by using the plurality of third processing instructions and the plurality of new reference images as a reference, to obtain the target image.

In a possible implementation, the plurality of reference images include a first image, a second image, and a third image, the plurality of reference texts include a first text used to describe the first image, a second text used to describe the second image, and a third text used to describe the third image, and the adjustment module is configured to: generate a fourth processing instruction and the second image based on the first image, the first text, and the second text, where the fourth processing instruction indicates a relationship between the first image and the second image; and adjust the first processing instruction based on the third image and the third text by using the fourth processing instruction as a reference, to obtain the second processing instruction, where the second processing instruction indicates a relationship between the third image and the target image.

In a possible implementation, the processing module is configured to: convert the third image based on the second processing instruction by using the to-be-trained model and by using the fourth processing instruction and the second image as a reference, to obtain the target image.

In a possible implementation, the first processing instruction includes a target text used to generate the target image, the target text includes at least one reference text used to describe the at least one reference image, the second processing instruction includes the target text and the at least one reference image embedded into the target text, and a location of embedding the at least one reference image is a location of the at least one reference text in the target text.

A fifth aspect of embodiments of this application provides an image processing apparatus. The apparatus includes a memory and a processor. The memory stores code, and the processor is configured to execute the code. When the code is executed, the item recommendation apparatus performs the method according to any one of the first aspect or the possible implementations of the first aspect.

A sixth aspect of embodiments of this application provides a model training apparatus. The apparatus includes a memory and a processor. The memory stores code, the processor is configured to execute the code, and when the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor. The processor is configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes a memory. The memory stores a computer program or computer instructions.

A ninth aspect of embodiments of this application provides a computer storage medium. The computer storage medium stores a computer program. When the program is executed by a computer, the computer is enabled to perform the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to perform the method according to any one of the first aspect, the possible implementations of the first aspect, the second aspect, or the possible implementations of the second aspect.

In this embodiment of this application, when the user needs to generate a target image, a plurality of reference images and a first processing instruction for the plurality of reference images may be first obtained from the user. The first processing instruction indicates the target image. Then, the first processing instruction may be adjusted by using the plurality of reference images, to obtain a second processing instruction. The second processing instruction indicates a relationship between at least one reference image in the plurality of reference images and the target image. Finally, the second processing instruction may be input into a target model, so that the target model processes the at least one reference image by using the second processing instruction, to obtain and output the target image, and provide the target image for the user for viewing and use. In the foregoing process, because the second processing instruction is obtained based on the plurality of reference images and the first processing instruction, when processing the at least one reference image in the plurality of reference images by using the second processing instruction, the target model may not only consider content of the at least one reference image in the plurality of reference images and content of the target image, but also consider a relationship between the content of the at least one image and the content of the target image. Factors considered are comprehensive. In this way, the target model can correctly understand an image generation intention of the user, so that a finally output target image is a correct image, thereby meeting a requirement of the user.

## BRIEF DESCRIPTION OF DRAWINGS

FIG. 1 is a diagram of a structure of an artificial intelligence main framework;
FIG. 2a is a diagram of a structure of an image processing system according to an embodiment of this application;
FIG. 2b is another diagram of a structure of an image processing system according to an embodiment of this application;
FIG. 2c is a diagram of an image processing-related device according to an embodiment of this application;
FIG. 3 is a diagram of an architecture of a system 100 according to an embodiment of this application;
FIG. 4 is a diagram of a structure of an image processing framework according to an embodiment of this application;
FIG. 5 is a schematic flowchart of an image processing method according to an embodiment of this application;
FIG. 6 is a diagram of an image processing framework according to an embodiment of this application;
FIG. 7 is another diagram of an image processing framework according to an embodiment of this application;
FIG. 8 is a schematic flowchart of a model training method according to an embodiment of this application;
FIG. 9 is a diagram of a structure of an image processing apparatus according to an embodiment of this application;
FIG. 10 is a diagram of a structure of a model training apparatus according to an embodiment of this application;
FIG. 11 is a diagram of a structure of an execution device according to an embodiment of this application;
FIG. 12 is a diagram of a structure of a training device according to an embodiment of this application; and
FIG. 13 is a diagram of a structure of a chip according to an embodiment of this application.

## DESCRIPTION OF EMBODIMENTS

Embodiments of this application provide an image processing method and a related device thereof. A model used in this application can correctly understand an image generation intention of a user, so that a target image finally output by the model is a correct image, thereby meeting a requirement of the user.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

An image controllable generation task is a typical task in computer vision. The task usually means generating, by a neural network model, an image required by a user under guidance provided by the user. For example, the user may provide a text, and the neural network model generates, based on the text, the image required by the user. For another example, the user may provide a text and an image, and the neural network model generates, based on the text and the image, the image required by the user.

In the related technology, when the user needs to generate the image, the user may input, to the neural network model, an image processing instruction and an image used to guide the model. The image processing instruction indicates a target image required by the user. After obtaining the image processing instruction and the image, the neural network model may perform feature extraction on the image, to obtain an image feature. Then, the neural network model may use the image feature as a guide signal, to guide an encoding process for the image processing instruction, to obtain the target image through encoding, and return the target image to the user for viewing and use. For example, the user provides an instruction "generate a plate of fruits" and a sketch of a plate of fruits, and the model may generate a color image of a plate of fruits based on the instruction and the sketch.

In the foregoing process, because the image processing instruction and the image used to guide the model are independent of each other, the neural network model may misunderstand guidance of the user (that is, an image generation intention of the user). As a result, the target image generated by the neural network model is not a correct image, and cannot meet a requirement of the user.

To resolve the foregoing problem, embodiments of this application provide an image processing method. The method may be implemented with reference to an artificial intelligence (artificial intelligence, AI) technology. The AI technology is a technical discipline that uses digital computers or machines controlled by digital computers to simulate, extend, and expand human intelligence. The AI technology obtains best results by sensing an environment, obtaining knowledge, and using the knowledge. In other words, the artificial intelligence technology is a branch of computer science, and seeks to learn essence of intelligence and produce a new intelligent machine that can react in a way similar to human intelligence. Using artificial intelligence to process data is a common application manner of artificial intelligence.

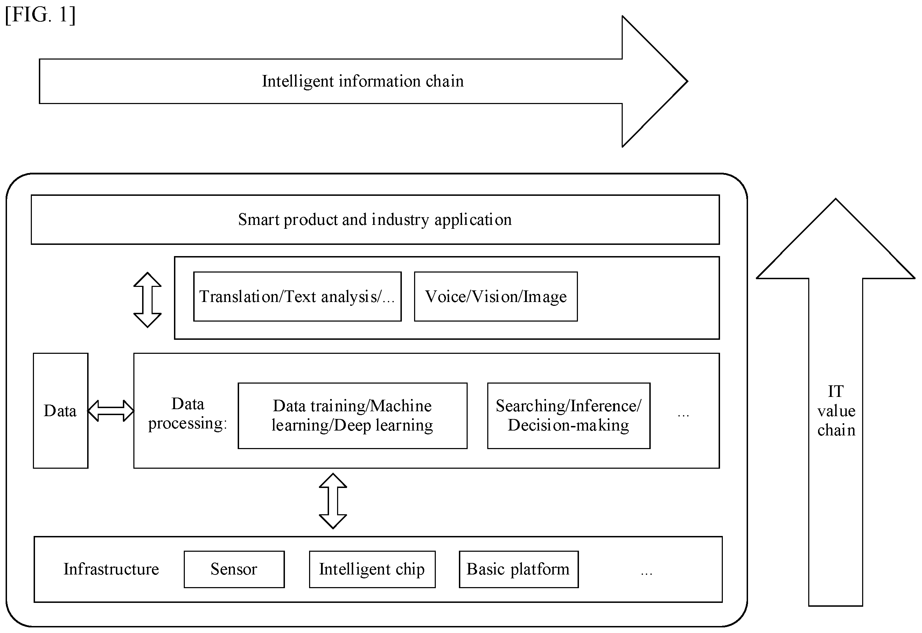

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry, spanning from an underlying infrastructure and information (technology providing and processing implementation) of artificial intelligence to an industrial ecological process of a system.

(1) Infrastructure

The infrastructure provides computing capability support for the artificial intelligence system, communicates with the external world, and implements support by using a basic platform. The infrastructure communicates with the outside world through a sensor. The computing capability is provided by intelligent chips (hardware acceleration chips such as a CPU, an NPU, a GPU, an ASIC, and an FPGA). The basic platform provides platform assurance and support, including distributed computing frameworks and networks, and may include cloud storage and computing, and interconnection networks. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, voice, and a text, further relates to internet of things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may perform symbolic and formalized intelligent information modeling, extraction, preprocessing, training, and the like on data.

Inference is a process in which a computer or an intelligent system simulates a human intelligent inference manner, and performs machine thinking and problem resolving by using formalized information according to an inference control policy. A typical function is searching and matching.

Decision-making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system such as translation, text analysis, computer vision processing, speech recognition, and image recognition.

(5) Smart product and industry application

The smart product and industry application are products and applications of the artificial intelligence system in various fields, and are encapsulation of an overall artificial intelligence solution, to productize and apply intelligent information decision-making. Application fields of the intelligent information decision-making mainly include smart terminals, smart transportation, smart health care, autonomous driving, smart cities, and the like.

The following describes several application scenarios of this application.

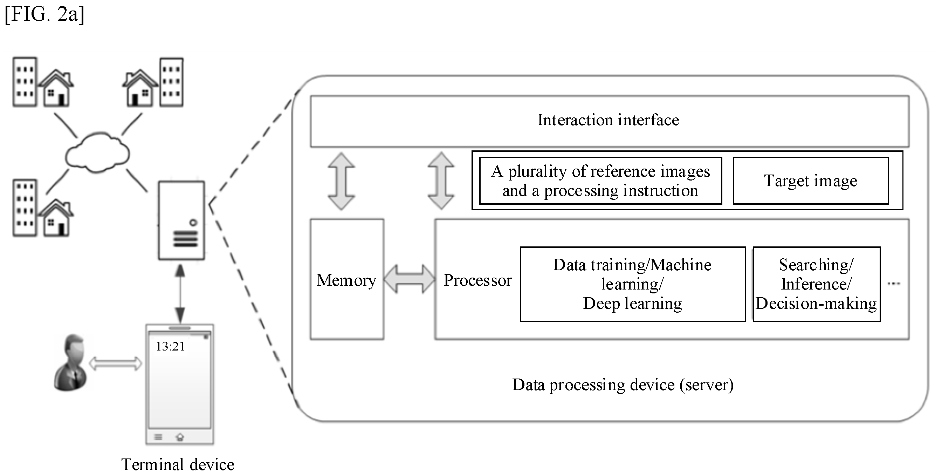

FIG. 2a is a diagram of a structure of an image processing system according to an embodiment of this application. The image processing system includes user equipment and a data processing device. The user equipment includes a smart terminal such as a mobile phone, a personal computer, or an information processing center. The user equipment is an image processing initiator, and is used as an initiator of an image processing request. Usually, a user initiates a request by using the user equipment.

The data processing device may be a device or a server that has a data processing function, for example, a cloud server, a network server, an application server, or a management server. The data processing device receives an image processing request from the smart terminal through an interaction interface, and then performs image processing in manners such as machine learning, deep learning, searching, inference, and decision-making by using a memory that stores data and a processor that processes data. The memory in the data processing device may be a general name, and includes a local storage and a database that stores historical data. The database may be located on the data processing device, or may be located on another network server.

In the image processing system shown in FIG. 2a, the user equipment may obtain an image input/selected by the user, and then initiate a request to the data processing device, so that the data processing device performs an image processing application on the image obtained by the user equipment, to obtain a corresponding processing result of the image. For example, the user equipment may obtain a plurality of reference images input by the user and processing instructions for the plurality of reference images, and then the user equipment may send information such as the plurality of reference images and the processing instructions to the data processing device, so that the data processing device performs a series of processing on the plurality of reference images based on the processing instructions, to obtain a target image, and return the target image to the user equipment, to provide the target image for the user for viewing and use.

In FIG. 2a, the data processing device may perform the image processing method in embodiments of this application.

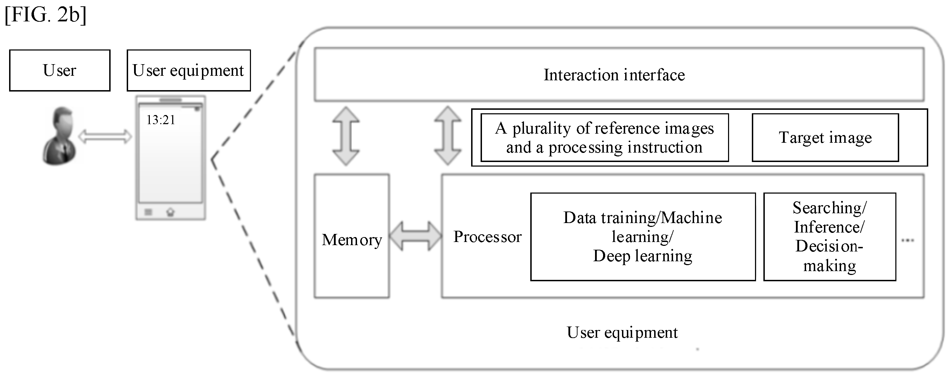

FIG. 2b is another diagram of a structure of an image processing system according to an embodiment of this application. In FIG. 2b, user equipment is directly used as a data processing device. The user equipment can directly obtain an input from a user, and the input is directly processed by hardware of the user equipment. A specific process is similar to that in FIG. 2a. For details, refer to the foregoing descriptions. Details are not described herein again.

In the image processing system shown in FIG. 2b, the user equipment may obtain a plurality of reference images input by the user and processing instructions for the plurality of reference images. Then, the user equipment may perform a series of processing on the plurality of reference images based on the processing instructions, to obtain a target image, and provide the target image for the user for viewing and use.

In FIG. 2b, the user equipment may perform the image processing method in embodiments of this application.

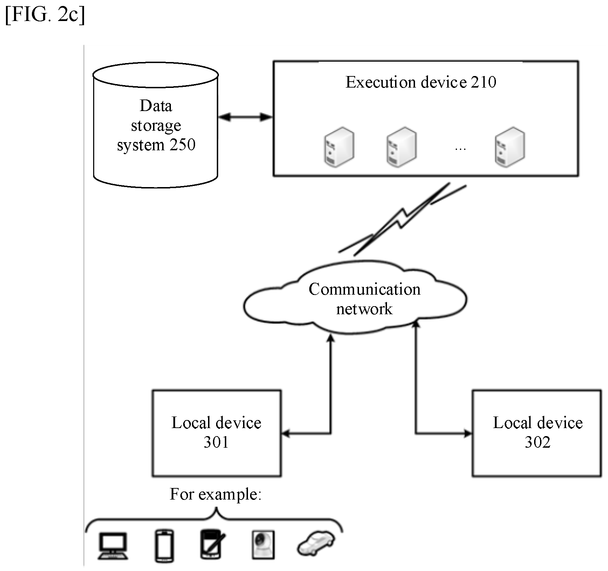

FIG. 2c is a diagram of an image processing-related device according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processors in FIG. 2a and FIG. 2b may perform data training/machine learning/deep learning by using a neural network model or another model (for example, a model based on a support vector machine), and perform an image processing application on an image by using a model finally obtained through data training or learning, to obtain a corresponding processing result.

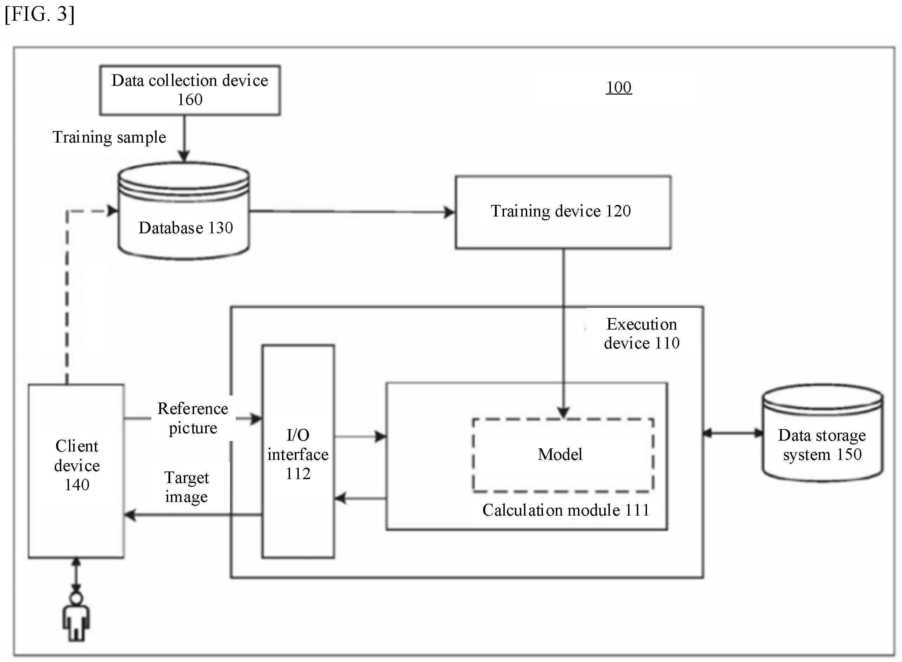

FIG. 3 is a diagram of an architecture of a system 100 according to an embodiment of this application. In FIG. 3, an execution device 110 is provided with an input/output (input/output, I/O) interface 112, configured to exchange data with an external device. A user may input data to the I/O interface 112 through a client device 140. The input data in this embodiment of this application may include each to-be-scheduled task, a resource that can be invoked, and other parameters.

In a process in which the execution device 110 preprocesses the input data, or in a process in which a calculation module 111 of the execution device 110 performs related processing such as computing (for example, implements functions of a neural network in this application), the execution device 110 may invoke data, code, and the like in a data storage system 150 for corresponding processing, and may also store, into the data storage system 150, data, instructions, and the like that are obtained through corresponding processing.

Finally, the I/O interface 112 returns a processing result to the client device 140, to provide the processing result for the user.

It should be noted that, for different objectives or different tasks, a training device 120 may generate corresponding target models/rules based on different training data, where the corresponding target models/rules may be used to achieve the foregoing objectives or complete the foregoing tasks, thereby providing required results for the user. The training data may be stored in a database 130, and is a training sample collected by a data collection device 160.

In a case shown in FIG. 3, the user may manually provide input data, and the manual operation may be performed in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of a system architecture according to an embodiment of this application. A location relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete calculation work of the calculation module 111. The chip may alternatively be disposed in the training device 120 shown in FIG. 3, to complete training work of the training device 120 and output the target model/rule.

The neural network processing unit NPU is mounted to a host central processing unit (central processing unit, CPU) (host CPU) as a coprocessor, and the host CPU assigns a task. A core part of the NPU is an operation circuit, and a controller controls the operation circuit to extract data in a memory (a weight memory or an input memory) and perform an operation.

In some implementations, the operation circuit includes a plurality of process engines (process engine, PE) inside. In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there is an input matrix A, a weight matrix B, and an output matrix C. The operation circuit fetches, from the weight memory, data corresponding to the matrix B, and buffers the data on each PE in the operation circuit. The operation circuit fetches data of the matrix A from the input memory, performs a matrix operation with the matrix B, and stores an obtained partial result or an obtained final result of the matrix in an accumulator (accumulator).

A vector calculation unit may perform further processing such as vector multiplication, vector addition, an exponent operation, a logarithm operation, or value comparison on an output of the operation circuit. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store processed output vectors into a unified buffer. For example, the vector calculation unit may apply a non-linear function to an output, for example, a vector of an accumulated value, of the operation circuit to generate an activation value. In some implementations, the vector calculation unit generates a normalized value, a combined value, or both a normalized value and a combined value. In some implementations, the processed output vector can be used as activated input to the operation circuit, for example, the processed output vector can be used at a subsequent layer of the neural network.

A unified memory is configured to store input data and output data.

For weight data, a direct memory access controller (direct memory access controller, DMAC) directly transfers input data from an external memory to the input memory and/or the unified memory, stores, in the weight memory, weight data in the external memory, and stores, in the external memory, data in the unified memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to invoke the instructions buffered in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes related terms and related concepts such as the neural network in embodiments of this application.

(1) Neural network

The neural network may include a neuron. The neuron may be an operation unit that uses $x_s$ and an intercept of 1 as an input. An output of the operation unit may be as follows:

$$h_{W,b}\left(x\right) = f\left(W^T x\right) = f\left(\sum\nolimits_{s=1}^{n} W_s x_s + b\right) \quad (1)$$

s = 1, 2, ..., or n, n is a natural number greater than 1, $W_s$ is a weight of $x_s$, and b is bias of the neuron. f is an activation function (activation functions) of the neuron, and is used to introduce a non-linear feature into the neural network to convert an input signal in the neuron into an output signal. The output signal of the activation function may serve as an input of a next convolution layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Working of each layer in a deep neural network may be described by using a mathematical expression $y = a(Wx + b)$. From a physical perspective, the working of each layer in the deep neural network may be understood as completing transformation from an input space to an output space (that is, from a row space to a column space of a matrix) by performing five operations on the input space (a set of input vectors). The five operations include: 1. dimension increasing/dimension reduction; 2. zooming in/zooming out; 3. rotation; 4. translation; and 5. "bending". The operations 1, 2, and 3 are completed by $Wx$, the operation 4 is completed by $+b$, and the operation 5 is implemented by $a()$. The word "space" is used herein for expression because a classified object is not a single thing, but a type of thing. Space is a set of all individuals of this type of thing. $W$ is a weight vector, and each value of the vector represents a weighting value of a neuron in this layer of neural network. The vector $W$ determines space transformation from the input space to the output space described above. In other words, a weight $W$ at each layer controls how to transform space. A purpose of training the deep neural network is to finally obtain a weight matrix (a weight matrix formed by vectors $W$ at a plurality of layers) at all layers of a trained neural network. Therefore, a training process of the neural network is essentially a manner of learning of control of space transformation, and more specifically, learning of a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

The following describes the method provided in this application from a neural network training side and a neural network application side.

The model training method provided in embodiments of this application relates to data sequence processing, and may be specifically applied to methods such as data training, machine learning, and deep learning, to perform symbolic and formalized intelligent information modeling, extraction, preprocessing, training, and the like on training data (for example, the plurality of reference images, the first processing instruction, and the second processing instruction in the model training method provided in embodiments of this application), to finally obtain a trained neural network (for example, the target model in the model training method provided in embodiments of this application). In addition, the image processing method provided in embodiments of this application may use the trained neural network to input data (for example, the plurality of reference images, the first processing instruction, and the second processing instruction in the image processing method provided in embodiments of this application) into the trained neural network, to obtain output data (for example, the target image in the image processing method provided in embodiments of this application). It should be noted that, the model training method and the image processing method provided in embodiments of this application are inventions generated based on a same idea, or may be understood as two parts in a system, or two phases of an entire procedure, for example, a model training phase and a model application phase.

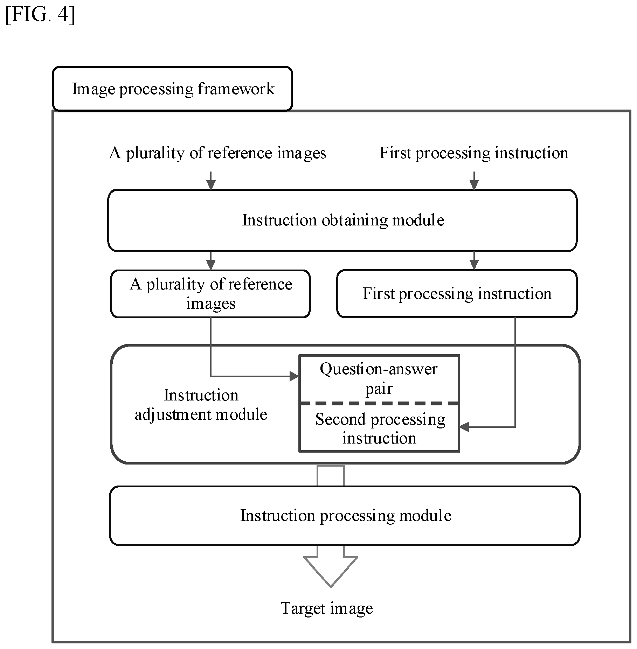

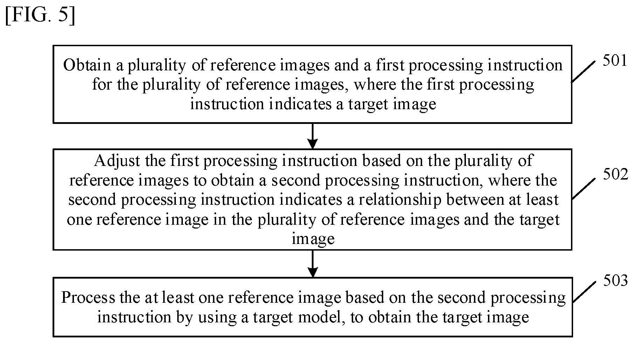

The following first describes the image processing method provided in embodiments of this application. The image processing method provided in embodiments of this application may be implemented by using an image processing framework shown in FIG. 4 (FIG. 4 is a diagram of a structure of an image processing framework according to an embodiment of this application). The framework may be deployed in the foregoing data processing device or user equipment. The framework includes an instruction adjustment module, an instruction synthesis module, and an instruction processing module. An input end of the instruction obtaining module is used as an input end of the entire framework. An output end of the instruction obtaining module is connected to an input end of the instruction adjustment module. An output end of the instruction adjustment module is connected to an input end of the instruction processing module. An output end of the instruction processing module is used as an output end of the entire framework. To learn a working process of the framework, the following describes the working process. FIG. 5 is a schematic flowchart of an image processing method according to an embodiment of this application. As shown in FIG. 5, the method includes the following steps.

501: Obtain a plurality of reference images and a first processing instruction for the plurality of reference images, where the first processing instruction indicates a target image.

In this embodiment, when the user needs to obtain the target image, the instruction obtaining module of the image processing framework may provide an interface (for example, a user interface) for the user. The user may input the plurality of reference images and the first processing instruction for the plurality of reference images into the interface. The first processing instruction indicates the target image (which may also be understood as an image required by the user). In this way, the instruction obtaining module may receive, through the interface, the plurality of reference images and the first processing instruction that are input by the user.

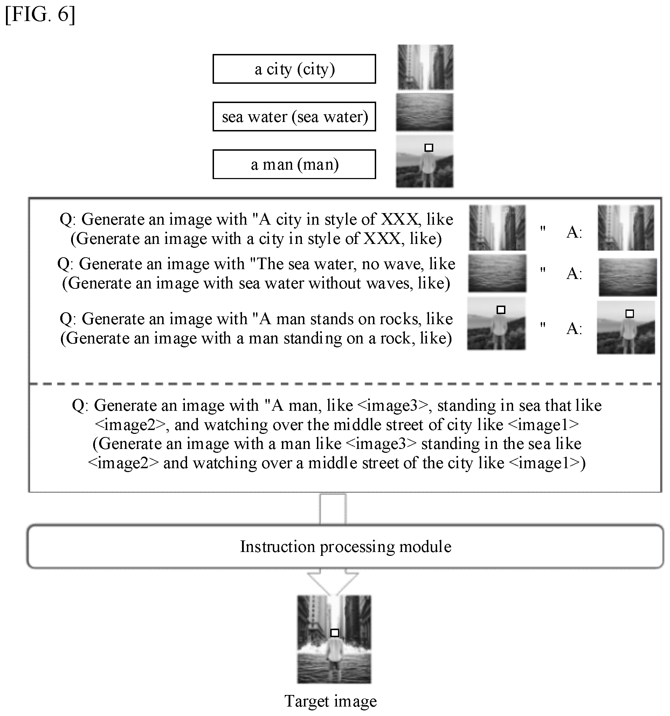

For example, as shown in FIG. 6 (FIG. 6 is a diagram of an image processing framework according to an embodiment of this application), it is assumed that the user needs to perform image fusion. The user may input a reference image 1, a reference image 2, a reference image 3, and a generation instruction (the foregoing first processing instruction) into the instruction obtaining module of the image processing framework. Content of the reference image 1 is a city, content of the reference image 2 is sea water, content of the reference image 3 is a man, and content of the generation instruction is "Generate an image with a man, standing in sea water, and watching over the middle street of city", indicating that content of the target image required by the user is a man standing in sea water and watching over a street in the city.

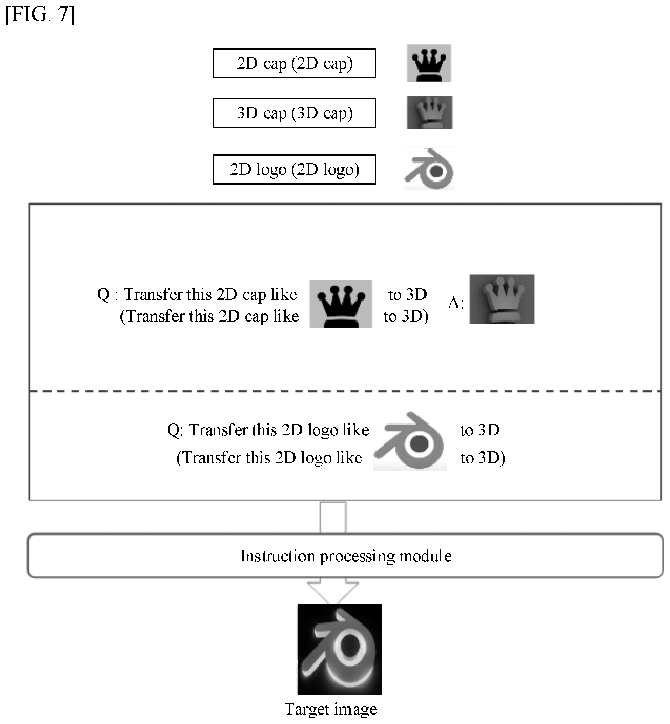

For another example, as shown in FIG. 7 (FIG. 7 is another diagram of an image processing framework according to an embodiment of this application), it is assumed that the user needs to perform image conversion. The user may input a reference image 1, a reference image 2, a reference image 3, and a generation instruction into the instruction obtaining module of the image processing framework. Content of the reference image 1 is a two-dimensional (2-dimensional, 2D) cap, content of the reference image 2 is a three-dimensional (3-dimensional, 3D) cap, content of the reference image 3 is a 2D logo, and content of the generation instruction is "Transfer 2D logo to 3D logo", indicating that content of the target image required by the user is a 3D logo.

Specifically, the first processing instruction input by the user into the instruction obtaining module is usually unimodal information. Therefore, the first processing instruction may be presented in a plurality of manners.

(1) The first processing instruction may include a target text used to generate the target image. Therefore, the first processing instruction may indicate the target image. For example, in the example shown in FIG. 6, the generation instruction input by the user is the target text describing the target image, and content of the target text is "Generate an image with a man, standing in sea water, and watching over the middle street of city".

(2) The first processing instruction may include target voice used to generate the target image, or the like. Therefore, the first processing instruction may indicate the target image. For example, in the example shown in FIG. 7, the generation instruction input by the user is target voice for generating the target image, and content of the target voice is "Transfer 2D logo to 3D logo".

More specifically, the instruction obtaining module may further obtain the following information.

On a basis of obtaining the plurality of reference images and the first processing instruction, the instruction obtaining module may further obtain a plurality of reference texts used to describe the plurality of reference images. It may be understood that the plurality of reference texts are in a one-to-one correspondence with the plurality of reference images, and one reference text is used to describe one reference image. It can be learned that the plurality of reference texts and the plurality of reference images may form a plurality of image-text pairs, and one image-text pair includes one reference image and one reference text.

More specifically, the instruction obtaining module may obtain the plurality of reference texts in the following manners.

(1) Information input by the user into the interface provided by the instruction obtaining module includes not only the plurality of reference images and the first processing instruction, but also the plurality of reference texts used to describe the plurality of reference images. In this case, the instruction obtaining module may successfully receive, through the interface, the plurality of reference images, the first processing instruction, and the plurality of reference texts that are input by the user.

For example, in the example shown in FIG. 6, the user may input the reference image 1, the reference image 2, the reference image 3, a reference text 1, a reference text 2, a reference text 3, and the generation instruction into the instruction obtaining module of the image processing framework. Content of the reference image 1 is a city, content of the reference text 1 is "a city", content of the reference image 2 is sea water, content of the reference text 2 is "sea water", content of the reference image 3 is a man, content of the reference text 3 is "a man", and content of the generation instruction is "Generate an image with a man, standing in sea water, and watching over the middle street of city".

In another example shown in FIG. 7, the user may input the reference image 1, the reference image 2, the reference image 3, a reference text 1, a reference text 2, a reference text 3, and the generation instruction into the instruction obtaining module of the image processing framework. Content of the reference image 1 is a 2D cap, content of the reference text 1 is "2D cap", content of the reference image 2 is a 3D cap, content of the reference text 2 is "3D cap", content of the reference image 3 is a 2D logo, content of the reference text 3 is "3D logo", and content of the generation instruction is "Transfer 2D logo to 3D logo".

(2) After obtaining the plurality of reference images input by the user, the instruction obtaining module may perform image recognition on the plurality of reference images, to obtain the plurality of reference texts used to describe the plurality of reference images.

(3) After obtaining the first processing instruction input by the user, because the first processing instruction includes the target text used to generate the target image, if the target text includes a text used to describe the plurality of reference images, the instruction obtaining module may extract the target text included in the first processing instruction, to obtain the plurality of reference texts.

502: Adjust the first processing instruction based on the plurality of reference images, to obtain a second processing instruction, where the second processing instruction indicates a relationship between at least one reference image in the plurality of reference images and the target image.

After obtaining the plurality of reference images and the first processing instruction, the instruction obtaining module may send the plurality of reference images and the first processing instruction to the instruction adjustment module. In this case, the instruction adjustment module may adjust the first processing instruction by using the plurality of reference images, to obtain the second processing instruction. The second processing instruction indicates the relationship between the at least one reference image in the plurality of reference images and the target image.

Specifically, the instruction adjustment module may obtain the second processing instruction in the following manners.

After obtaining the plurality of reference images, the plurality of reference texts, and the first processing instruction, the instruction obtaining module may send the plurality of reference images, the plurality of reference texts, and the first processing instruction to the instruction adjustment module. Therefore, the instruction adjustment module may adjust the first processing instruction by using the plurality of reference images and the plurality of reference texts, to obtain the second processing instruction.

More specifically, the instruction adjustment module may further obtain the second processing instruction in the following manners.

(1) After obtaining the plurality of image-text pairs and the first processing instruction, for any one of the plurality of image-text pairs, the instruction adjustment module may generate a question-answer pair by using one reference image and one reference text that are included in the image-text pair. The question-answer pair includes one third processing instruction (that is, a question) and one new reference image (that is, an answer). The third processing instruction indicates a relationship between the reference image in the image-text pair and the new reference image in the question-answer pair (in other words, the new reference image is generated by imitating the reference image).

It should be noted that, for the image-text pair, the instruction adjustment module may first generate the new reference image based on the reference image in the image-text pair. Then, the instruction adjustment module may expand the reference text in the image-text pair, to obtain a new reference text used to describe the new reference image. It may be understood that the new reference text includes the reference text. In this case, the instruction adjustment module may embed the reference image into the new reference text (a location of embedding the reference image is a location of the reference text in the new reference text), to obtain the third processing instruction. Therefore, the third processing instruction and the new reference image form a question-answer pair generated based on the image-text pair.

For another image-text pair in the plurality of image-text pairs, the instruction adjustment module may also perform a similar operation on the another image-text pair. Therefore, a plurality of question-answer pairs may be finally obtained. The plurality of question-answer pairs include a plurality of third processing instructions and a plurality of new reference images, and the plurality of third processing instructions are in a one-to-one correspondence with the plurality of new reference images.

After the plurality of question-answer pairs are obtained, that is, after the plurality of third processing instructions and the plurality of new reference images are obtained, the instruction adjustment module may adjust the first processing instruction by using the plurality of third processing instructions as a reference and by using the plurality of reference images and the plurality of reference texts, to obtain the second processing instruction. The second processing instruction indicates a relationship between the plurality of reference images and the target image (in other words, the target image is generated by imitating the plurality of reference images, that is, the target image is obtained by fusing the plurality of reference images).

It should be noted that the user needs to complete image fusion for the plurality of reference images. In this case, the target text in the first processing instruction includes the plurality of reference texts. In this case, after referring to an internal structure of the plurality of third processing instructions, the instruction adjustment module may determine locations of the plurality of reference texts in the target text, and embed the plurality of reference images into the target text based on the locations, to obtain the second processing instruction. It can be learned that the second processing instruction obtained by the instruction adjustment module is multi-modal information. The second processing instruction not only includes the target text, but also includes the plurality of reference images embedded into the target text. The locations of embedding the plurality of reference images are the locations of the plurality of reference texts in the target text.

For example, in the example shown in FIG. 6, after the instruction obtaining module sends the reference image 1, the reference image 2, the reference image 3, the reference text 1, the reference text 2, the reference text 3, and the generation instruction to the instruction adjustment module, the instruction adjustment module may expand the reference text 1 and insert the reference image 1 into the reference text 1, to obtain a question 1: Generate an image with "A city in style of XXX, like <image1> (that is, the reference image 1)". In addition, the instruction adjustment module may further generate a new reference image 1 as an answer 1 based on the reference image 1. Content of the reference image 1 and content of the new reference image 1 are mostly the same, and only details (for example, textures and colors) are different. In this case, the question 1 and the answer 1 form a question-answer pair 1.

Similarly, the instruction adjustment module may expand the reference text 2 and insert the reference image 2 into the reference text 2, to obtain a question 2: Generate an image with "The sea water, no wave, like <image2>". In addition, the instruction adjustment module may further generate a new reference image 2 as an answer 2 based on the reference image 2. In this case, the question 2 and the answer 2 form a question-answer pair 2.

Similarly, the instruction adjustment module may expand the reference text 3 and insert the reference image 3 into the reference text 3, to obtain the question 2: Generate an image with "A man stands on rocks, like <image3>". In addition, the instruction adjustment module may further generate a new reference image 3 as an answer 3 based on the reference image 3. In this case, the question 3 and the answer 3 form a question-answer pair 3.

After obtaining the three question-answer pairs, the instruction adjustment module may determine locations of the reference text 1, the reference text 2, and the reference text 3 in the generation instruction by referring to styles of the question 1, the question 2, and the question 3, and insert the reference image 1, the reference image 2, and the reference image 3 into the generation instruction based on the three locations, to obtain a newly generated instruction (the foregoing second processing instruction): "Generate an image with "A man, like <image3>, standing in sea that like <image2>, and watching over the middle street of city like <image1>".

(2) It is assumed that the plurality of image-text pairs include a first image-text pair, a second image-text pair, and a third image-text pair. The first image-text pair includes a first image in the plurality of reference images and a first text that is in the plurality of reference texts and that is used to describe the first image. The second image-text pair includes a second image in the plurality of reference images and a second text that is in the plurality of reference texts and that is used to describe the second image. The third image-text pair includes a third image in the plurality of reference images and a third text that is in the plurality of reference texts and that is used to describe the third image. Then, the instruction adjustment module may use the first image-text pair and the second image-text pair to generate a question-answer pair. The question-answer pair includes a fourth processing instruction (that is, a question) and a second image (that is, an answer). The fourth processing instruction indicates a relationship between the first image and the second image (in other words, the second image is obtained by converting the first image).

It should be noted that, for the first image-text pair and the second image-text pair, the instruction adjustment module may fuse and expand the first text and the second text to obtain a fourth text used to generate the second image. It may be understood that the fourth text includes the first text and the second text. Then, the instruction adjustment module may embed the first image into the fourth text (a location of embedding the first image is a location of the first text in the fourth text), to obtain the fourth processing instruction. Therefore, the fourth processing instruction and the second image form a question-answer pair generated based on the first image-text pair and the second image-text pair.

After the question-answer pair is obtained, that is, after the fourth processing instruction and the second image are obtained, the instruction adjustment module may adjust the first processing instruction by using the third image and the third text and by using the fourth processing instruction as a reference, to obtain the second processing instruction. The second processing instruction indicates a relationship between the third image and the target image (in other words, the target image is obtained by converting the third image).

It should be noted that the user needs to complete image conversion for the third image. In this case, the target text in the first processing instruction includes the third text. Then, after referring to an internal structure of the fourth processing instruction, the instruction adjustment module may determine a location of the third text in the target text, and embed the third image into the target text based on the location, to obtain the second processing instruction. It can be learned that the second processing instruction obtained by the instruction adjustment module is multi-modal information. The second processing instruction not only includes the target text, but also includes the third image embedded into the target text. The location of embedding the third image is the location of the third text in the target text.

For example, in the example shown in FIG. 7, after the instruction obtaining module sends the reference image 1, the reference image 2, the reference image 3, the reference text 1, the reference text 2, the reference text 3, and the generation instruction to the instruction adjustment module, the instruction adjustment module may fuse and expand the reference text 1 and the reference text 2, and insert the reference image 1 into the reference text 1 and the reference text 2, to obtain a question "Transfer this 2D cap like <image1> (namely, the reference image 1) to 3D". In addition, the instruction adjustment module may directly use the reference image 2 as a corresponding answer. In this case, the question and the answer form a question-answer pair.

After obtaining the question-answer pair, the instruction adjustment module may determine a location of the reference text 3 in the generation instruction with reference to a style of the question in the question-answer pair, and insert the reference image 3 into the generation instruction based on the location, to obtain a newly generated instruction: "Transfer this 2D logo like <image3> to 3D".

503: Process the at least one reference image based on the second processing instruction by using a target model, to obtain the target image.

After obtaining the second processing instruction, the instruction adjustment module may send the second processing instruction to the instruction processing module. Because the instruction processing module includes the target model (a trained neural network model, for example, a multi-modal large language model), this is equivalent to inputting the second processing instruction into the target model. In this way, the target model processes the at least one reference image based on the second processing instruction, to obtain and output the target image. The target image may be provided for a user for viewing and use.

Specifically, the instruction processing module may obtain the target image in a plurality of manners.

(1) After obtaining the second processing instruction, the instruction adjustment module may send the plurality of third processing instructions, the plurality of newly generated reference images, and the second processing instruction to the instruction processing module. Therefore, the target model in the instruction processing module may fuse the plurality of reference images based on the second processing instruction by using the plurality of third processing instructions and the plurality of newly generated reference images as a reference, to obtain the target image. It may be understood that after parsing the second processing instruction, the target model may obtain the target text included in the second processing instruction and the plurality of reference images embedded into the target text. Therefore, the target model may determine that image fusion needs to be performed on the plurality of reference images. Therefore, the target model may fuse the plurality of reference images, to obtain the target image.

For example, in the example shown in FIG. 6, after the instruction obtaining module sends the three question-answer pairs and the newly generated instruction to the target model in the instruction processing module, the target model may consider the newly generated instruction as a new question by imitating content of the three question-answer pairs, and fuse the reference image 1, the reference image 2, and the reference image 3 included in the new question, to obtain the target image. Content of the target image is a man standing in sea water and looking at a street in a city.

(2) After obtaining the second processing instruction, the instruction adjustment module may send the fourth processing instruction, the second image, and the second processing instruction to the instruction processing module. Therefore, the target model in the instruction processing module may convert the third image based on the second processing instruction by using the fourth processing instruction and the second image as a reference, to obtain the target image. It may be understood that after parsing the second processing instruction, the target model may obtain the target text included in the second processing instruction and the third image embedded into the target text. Therefore, the target model may determine that image conversion needs to be performed on the third image. Therefore, the target model may convert the third image, to obtain the target image.

For example, in the example shown in FIG. 7, after the instruction obtaining module sends the question-answer pair and the newly generated instruction to the target model in the instruction processing module, the target model may consider the newly generated instruction as a new question by imitating content of the question-answer pair, and convert the reference image 3 included in the new question, to obtain a target image. Content of the target image is a 3D logo.

It should be understood that, in this embodiment of this application, the instruction adjustment module may include a rule or a model. The rule or the model is used to adjust the first processing instruction to obtain the second processing instruction. It should be noted that the rule may be an algorithm, and the model may be a neural network model. The model included in the instruction adjustment module and the target model included in the instruction processing module may be a same model or different models. This is not limited herein.

It should be further understood that, in this embodiment of this application, only conversion from a 2D image to a 3D image is used as an example of image conversion for description. In an actual application, image conversion may further include conversion from a low resolution image to a high resolution image, conversion from a blurry image to a clear image, conversion from a low dynamic range image to a high dynamic range image, conversion from a black-and-white image to a color image, and the like.

In this embodiment of this application, when the user needs to generate a target image, a plurality of reference images and a first processing instruction for the plurality of reference images may be first obtained from the user. The first processing instruction indicates the target image. Then, the first processing instruction may be adjusted by using the plurality of reference images, to obtain a second processing instruction. The second processing instruction indicates a relationship between at least one reference image in the plurality of reference images and the target image. Finally, the second processing instruction may be input into a target model, so that the target model processes the at least one reference image by using the second processing instruction, to obtain and output the target image, and provide the target image for the user for viewing and use. In the foregoing process, because the second processing instruction is obtained based on the plurality of reference images and the first processing instruction, when processing the at least one reference image in the plurality of reference images by using the second processing instruction, the target model may not only consider content of the at least one reference image in the plurality of reference images and content of the target image, but also consider a relationship between the content of the at least one image and the content of the target image. Factors considered are comprehensive. In this way, the target model can correctly understand an image generation intention of the user, so that a finally output target image is a correct image, thereby meeting a requirement of the user.

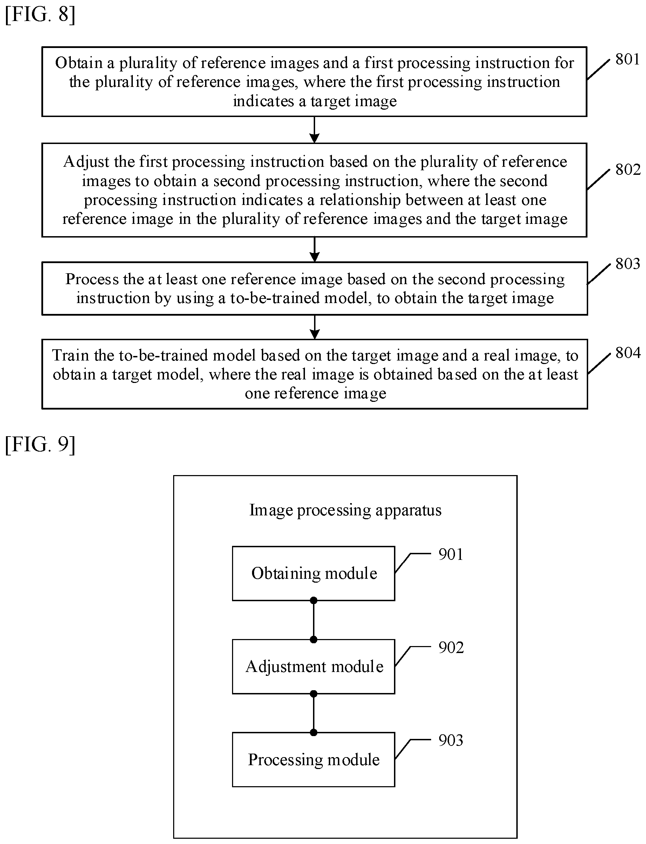

The foregoing describes in detail the image processing method provided in embodiments of this application. The following describes a model training method provided in embodiments of this application. FIG. 8 is a schematic flowchart of a model training method according to an embodiment of this application. As shown in FIG. 8, the method includes the following steps.

801: Obtain a plurality of reference images and a first processing instruction for the plurality of reference images, wherein the first processing instruction indicates a target image.

In this embodiment, when a to-be-trained model needs to be trained, a batch of training data may be first obtained. The batch of training data includes the plurality of reference images and the first processing instruction for the plurality of reference images. It should be noted that a real image obtained based on the plurality of reference images is known. In other words, a real processing result for the plurality of reference images is known.

In a possible implementation, the method further includes: obtaining a plurality of reference texts, where the plurality of reference texts are used to describe the plurality of reference images.

In a possible implementation, obtaining the plurality of reference texts includes: obtaining the plurality of reference texts input by a user; performing image recognition on the plurality of reference images to obtain the plurality of reference texts; or performing text extraction on the first processing instruction to obtain the plurality of reference texts.

For descriptions of step 801, refer to the related descriptions of step 501 in the embodiment shown in FIG. 5. Details are not described herein again.

802: Adjust the first processing instruction based on the plurality of reference images to obtain a second processing instruction, where the second processing instruction indicates a relationship between at least one reference image in the plurality of reference images and the target image.

After obtaining the plurality of reference images and the first processing instruction, the first processing instruction may be adjusted by using the plurality of reference images, to obtain a second processing instruction. The second processing instruction indicates a relationship between at least one reference image in the plurality of reference images and the target image.

In a possible implementation, adjusting the first processing instruction based on the plurality of reference images to obtain the second processing instruction includes: adjusting the first processing instruction based on the plurality of reference images and the plurality of reference texts, to obtain the second processing instruction.

In a possible implementation, adjusting the first processing instruction based on the plurality of reference images and the plurality of reference texts to obtain the second processing instruction includes: generating a plurality of third processing instructions and a plurality of new reference images based on the plurality of reference images and the plurality of reference texts, where one third processing instruction indicates a relationship between one reference image and one new reference image; and adjusting the first processing instruction based on the plurality of reference images and the plurality of reference texts by using the plurality of third processing instructions as a reference, to obtain the second processing instruction, where the second processing instruction indicates a relationship between the plurality of reference images and the target image.

In a possible implementation, the plurality of reference images include a first image, a second image, and a third image, the plurality of reference texts include a first text used to describe the first image, a second text used to describe the second image, and a third text used to describe the third image, and adjusting the first processing instruction based on the plurality of reference images and the plurality of reference texts to obtain the second processing instruction includes: generating a fourth processing instruction and the second image based on the first image, the first text, and the second text, where the fourth processing instruction indicates a relationship between the first image and the second image; and adjusting the first processing instruction based on the third image and the third text by using the fourth processing instruction as a reference, to obtain the second processing instruction, where the second processing instruction indicates a relationship between the third image and the target image.

In a possible implementation, the first processing instruction includes a target text used to generate the target image, the target text includes at least one reference text used to describe the at least one reference image, the second processing instruction includes the target text and the at least one reference image embedded into the target text, and a location of embedding the at least one reference image is a location of the at least one reference text in the target text.

For descriptions of step 802, refer to the related descriptions of step 502 in the embodiment shown in FIG. 5. Details are not described herein again.

803: Process the at least one reference image based on the second processing instruction by using the to-be-trained model, to obtain the target image.

After the second processing instruction is obtained, the second processing instruction may be input into the to-be-trained model, so that the to-be-trained model processes the at least one reference image by using the second processing instruction, to obtain and externally output the target image, that is, a prediction processing result for the plurality of reference images.

In a possible implementation, processing the at least one reference image based on the second processing instruction by using the to-be-trained model, to obtain the target image includes: fusing the plurality of reference images based on the second processing instruction by using the to-be-trained model and by using the plurality of third processing instructions and the plurality of new reference images as a reference, to obtain the target image.

In a possible implementation, processing the at least one reference image based on the second processing instruction by using the to-be-trained model, to obtain the target image includes: converting the third image based on the second processing instruction by using the to-be-trained model and by using the fourth processing instruction and the second image as a reference, to obtain the target image.

For descriptions of step 803, refer to the related descriptions of step 503 in the embodiment shown in FIG. 5. Details are not described herein again.

804: Train the to-be-trained model based on the target image and a real image, to obtain a target model, where the real image is obtained based on the at least one reference image.

After the target image is obtained, because the real image is known, the target image and the real image may be calculated by using a preset loss function, to obtain a target loss. The target loss indicates a difference between the target image and the real image (that is, a difference between a prediction processing result for the plurality of reference images and a real processing result for the plurality of reference images). After the target loss is obtained, the parameter of the to-be-trained model may be updated by using the target loss, to obtain the to-be-trained model of which the parameter is updated. Then, a next batch of training data may be obtained, and the to-be-trained model whose parameter is updated continues to be trained by using the next batch of training data until a model training condition (for example, target loss convergence) is met, to obtain the target model in the embodiment shown in FIG. 5.

The target model obtained through training in this embodiment of this application has an image processing function. Specifically, when the user needs to generate a target image, a plurality of reference images and a first processing instruction for the plurality of reference images may be first obtained from the user. The first processing instruction indicates the target image. Then, the first processing instruction may be adjusted by using the plurality of reference images, to obtain a second processing instruction. The second processing instruction indicates a relationship between at least one reference image in the plurality of reference images and the target image. Finally, the second processing instruction may be input into a target model, so that the target model processes the at least one reference image by using the second processing instruction, to obtain and output the target image, and provide the target image for the user for viewing and use. In the foregoing process, because the second processing instruction is obtained based on the plurality of reference images and the first processing instruction, when processing the at least one reference image in the plurality of reference images by using the second processing instruction, the target model may not only consider content of the at least one reference image in the plurality of reference images and content of the target image, but also consider a relationship between the content of the at least one image and the content of the target image. Factors considered are comprehensive. In this way, the target model can correctly understand an image generation intention of the user, so that a finally output target image is a correct image, thereby meeting a requirement of the user.

The foregoing describes in detail the image processing method and the model training method provided in embodiments of this application. The following describes an image processing apparatus and a model training apparatus provided in embodiments of this application. FIG. 9 is a diagram of a structure of an image processing apparatus according to an embodiment of this application. As shown in FIG. 9, the apparatus includes:

an obtaining module 901, configured to obtain a plurality of reference images and a first processing instruction for the plurality of reference images, where the first processing instruction indicates a target image;
an adjustment module 902, configured to adjust the first processing instruction based on the plurality of reference images, to obtain a second processing instruction, where the second processing instruction indicates a relationship between at least one reference image in the plurality of reference images and the target image; and
a processing module 903, configured to process the at least one reference image based on the second processing instruction by using a target model, to obtain the target image.

In this embodiment of this application, when the user needs to generate a target image, a plurality of reference images and a first processing instruction for the plurality of reference images may be first obtained from the user. The first processing instruction indicates the target image. Then, the first processing instruction may be adjusted by using the plurality of reference images, to obtain a second processing instruction. The second processing instruction indicates a relationship between at least one reference image in the plurality of reference images and the target image. Finally, the second processing instruction may be input into a target model, so that the target model processes the at least one reference image by using the second processing instruction, to obtain and output the target image, and provide the target image for the user for viewing and use. In the foregoing process, because the second processing instruction is obtained based on the plurality of reference images and the first processing instruction, when processing the at least one reference image in the plurality of reference images by using the second processing instruction, the target model may not only consider content of the at least one reference image in the plurality of reference images and content of the target image, but also consider a relationship between the content of the at least one image and the content of the target image. Factors considered are comprehensive. In this way, the target model can correctly understand an image generation intention of the user, so that a finally output target image is a correct image, thereby meeting a requirement of the user.

In a possible implementation, the obtaining module 901 is further configured to obtain a plurality of reference texts, where the plurality of reference texts are used to describe the plurality of reference images. The adjustment module 902 is configured to adjust the first processing instruction based on the plurality of reference images and the plurality of reference texts, to obtain the second processing instruction.

In a possible implementation, the obtaining module 901 is configured to: obtain the plurality of reference texts input by a user; perform image recognition on the plurality of reference images to obtain the plurality of reference texts; or perform text extraction on the first processing instruction to obtain the plurality of reference texts.

In a possible implementation, the adjustment module 902 is configured to: generate a plurality of third processing instructions and a plurality of new reference images based on the plurality of reference images and the plurality of reference texts, where one third processing instruction indicates a relationship between one reference image and one new reference image; and adjust the first processing instruction based on the plurality of reference images and the plurality of reference texts by using the plurality of third processing instructions as a reference, to obtain the second processing instruction, where the second processing instruction indicates a relationship between the plurality of reference images and the target image.

In a possible implementation, the processing module 903 is configured to: fuse the plurality of reference images based on the second processing instruction by using the target model and by using the plurality of third processing instructions and the plurality of new reference images as a reference, to obtain the target image.

In a possible implementation, the plurality of reference images include a first image, a second image, and a third image, the plurality of reference texts include a first text used to describe the first image, a second text used to describe the second image, and a third text used to describe the third image, and the adjustment module 902 is configured to: generate a fourth processing instruction and the second image based on the first image, the first text, and the second text, where the fourth processing instruction indicates a relationship between the first image and the second image; and adjust the first processing instruction based on the third image and the third text by using the fourth processing instruction as a reference, to obtain the second processing instruction, where the second processing instruction indicates a relationship between the third image and the target image.

In a possible implementation, the processing module 903 is configured to: convert the third image based on the second processing instruction by using the target model and by using the fourth processing instruction and the second image as a reference, to obtain the target image.

In a possible implementation, the first processing instruction includes a target text used to generate the target image, the target text includes at least one reference text used to describe the at least one reference image, the second processing instruction includes the target text and the at least one reference image embedded into the target text, and a location of embedding the at least one reference image is a location of the at least one reference text in the target text.

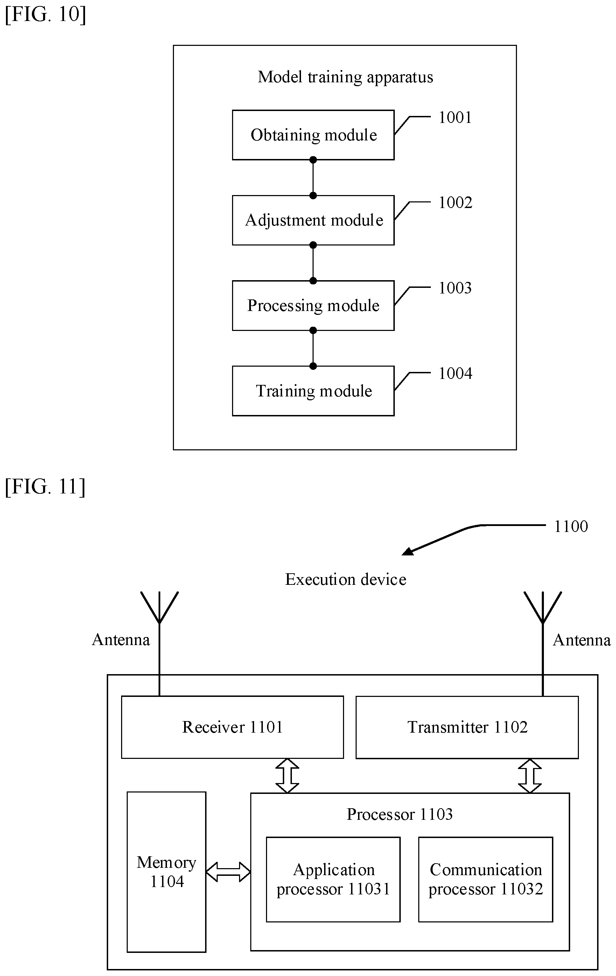

FIG. 10 is a diagram of a structure of a model training apparatus according to an embodiment of this application. As shown in FIG. 10, the apparatus includes:

an obtaining module 1001, configured to obtain a plurality of reference images and a first processing instruction for the plurality of reference images, where the first processing instruction indicates a target image;

an adjustment module 1002, configured to adjust the first processing instruction based on the plurality of reference images, to obtain a second processing instruction, where the second processing instruction indicates a relationship between at least one reference image in the plurality of reference images and the target image;

a processing module 1003, configured to process the at least one reference image based on the second processing instruction by using a to-be-trained model, to obtain the target image; and

a training module 1004, configured to train the to-be-trained model based on the target image and a real image, to obtain the target model, where the real image is obtained based on the at least one reference image.

The target model obtained through training in this embodiment of this application has an image processing function. Specifically, when the user needs to generate a target image, a plurality of reference images and a first processing instruction for the plurality of reference images may be first obtained from the user. The first processing instruction indicates the target image. Then, the first processing instruction may be adjusted by using the plurality of reference images, to obtain a second processing instruction. The second processing instruction indicates a relationship between at least one reference image in the plurality of reference images and the target image. Finally, the second processing instruction may be input into a target model, so that the target model processes the at least one reference image by using the second processing instruction, to obtain and output the target image, and provide the target image for the user for viewing and use. In the foregoing process, because the second processing instruction is obtained based on the plurality of reference images and the first processing instruction, when processing the at least one reference image in the plurality of reference images by using the second processing instruction, the target model may not only consider content of the at least one reference image in the plurality of reference images and content of the target image, but also consider a relationship between the content of the at least one image and the content of the target image. Factors considered are comprehensive. In this way, the target model can correctly understand an image generation intention of the user, so that a finally output target image is a correct image, thereby meeting a requirement of the user.

In a possible implementation, the obtaining module 1001 is further configured to obtain a plurality of reference texts, where the plurality of reference texts are used to describe the plurality of reference images. The adjustment module 1002 is configured to adjust the first processing instruction based on the plurality of reference images and the plurality of reference texts, to obtain the second processing instruction.

In a possible implementation, the obtaining module 1001 is configured to: obtain the plurality of reference texts input by a user; perform image recognition on the plurality of reference images to obtain the plurality of reference texts; or perform text extraction on the first processing instruction to obtain the plurality of reference texts.

In a possible implementation, the adjustment module 1002 is configured to: generate a plurality of third processing instructions and a plurality of new reference images based on the plurality of reference images and the plurality of reference texts, where one third processing instruction indicates a relationship between one reference image and one new reference image; and adjust the first processing instruction based on the plurality of reference images and the plurality of reference texts by using the plurality of third processing instructions as a reference, to obtain the second processing instruction, where the second processing instruction indicates a relationship between the plurality of reference images and the target image.

In a possible implementation, the processing module 1003 is configured to: fuse the plurality of reference images based on the second processing instruction by using the to-be-trained model and by using the plurality of third processing instructions and the plurality of new reference images as a reference, to obtain the target image.

In a possible implementation, the plurality of reference images include a first image, a second image, and a third image, the plurality of reference texts include a first text used to describe the first image, a second text used to describe the second image, and a third text used to describe the third image, and the adjustment module 1002 is configured to: generate a fourth processing instruction and the second image based on the first image, the first text, and the second text, where the fourth processing instruction indicates a relationship between the first image and the second image; and adjust the first processing instruction based on the third image and the third text by using the fourth processing instruction as a reference, to obtain the second processing instruction, where the second processing instruction indicates a relationship between the third image and the target image.

In a possible implementation, the processing module 1003 is configured to: convert the third image based on the second processing instruction by using the to-be-trained model and by using the fourth processing instruction and the second image as a reference, to obtain the target image.

In a possible implementation, the first processing instruction includes a target text used to generate the target image, the target text includes at least one reference text used to describe the at least one reference image, the second processing instruction includes the target text and the at least one reference image embedded into the target text, and a location of embedding the at least one reference image is a location of the at least one reference text in the target text.

It should be noted that, content such as information exchange between the modules/units of the apparatuses and an execution process is based on the same concept as the method embodiments of this application, and produces the same technical effect as that of the method embodiments of this application. For specific content, refer to the foregoing descriptions in the method embodiments of this application. Details are not described herein again.

An embodiment of this application further relates to an execution device. FIG. 11 is a diagram of a structure of an execution device according to an embodiment of this application. As shown in FIG. 11, the execution device 1100 may be specifically represented as a mobile phone, a tablet, a notebook computer, an intelligent wearable device, a server, or the like. This is not limited herein. The image processing apparatus described in the embodiment corresponding to FIG. 9 may be deployed on the execution device 1100, to implement an image processing function in the embodiment corresponding to FIG. 5. Specifically, the execution device 1100 includes a receiver 1101, a transmitter 1102, a processor 1103, and a memory 1104 (there may be one or more processors 1103 in the execution device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data for the processor 1103. A part of the memory 1104 may further include a non-volatile random access memory (non-volatile random access memory, NVRAM). The memory 1104 stores a processor and operation instructions, an executable module, a data structure, a subset thereof, or an extension set thereof. The operation instructions may include various operation instructions for implementing various operations.

The processor 1103 controls operations of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 1103, or implemented by the processor 1103. The processor 1103 may be an integrated circuit chip and has a signal processing capability. In an implementation process, each step of the foregoing method may be completed by using an integrated logic circuit of hardware in the processor 1103 or an instruction in a form of software. The processor 1103 may be a general-purpose processor, a digital signal processor (digital signal processing, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1104, and the processor 1103 reads information in the memory 1104 and completes the steps in the foregoing methods in combination with hardware of the processor.

The receiver 1101 may be configured to: receive input digit or character information, and generate a signal input related to a related setting and function control of the execution device. The transmitter 1102 may be configured to output digit or character information through a first interface. The transmitter 1102 may be further configured to send instructions to a disk group through the first interface, to modify data in the disk group. The transmitter 1102 may further include a display device, for example, a display.

In an embodiment of this application, in a case, the processor 1103 is configured to generate a target image for a user by using the target model in the embodiment corresponding to FIG. 5.

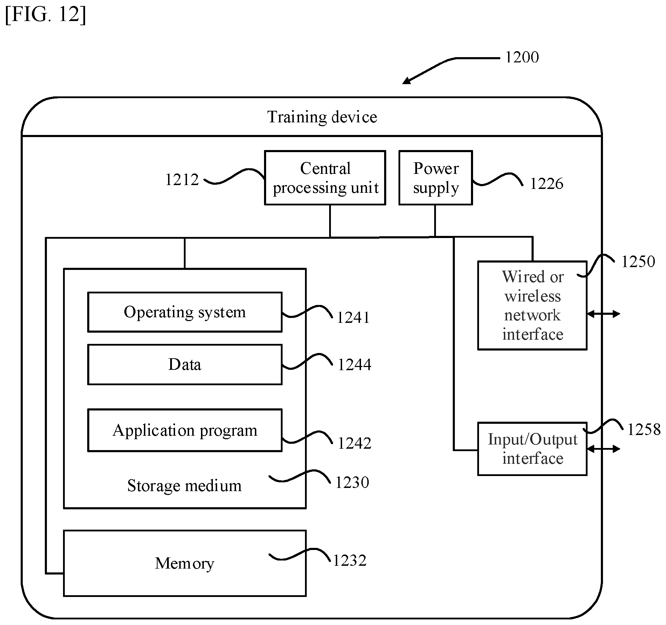

An embodiment of this application further relates to a training device. FIG. 12 is a diagram of a structure of a training device according to an embodiment of this application. As shown in FIG. 12, the training device 1200 is implemented by one or more servers. The training device 1200 may vary greatly due to different configurations or performance, and may include one or more central processing units (central processing units, CPU) 1212 (for example, one or more processors) and a memory 1232, and one or more storage media 1230 (for example, one or more mass storage devices) storing an application program 1242 or data 1244. The memory 1232 and the storage medium 1230 may be transient storage or persistent storage. The program stored in the storage medium 1230 may include one or more modules (not shown in the figure). Each module may include a series of instruction operations for the training device. Further, the central processing unit 1212 may be configured to communicate with the storage medium 1230, to perform, on the training device 1200, a series of instruction operations in the storage medium 1230.

The training device 1200 may further include one or more power supplies 1226, one or more wired or wireless network interfaces 1250, one or more input/output interfaces 1258, or one or more operating systems 1241, for example, Windows ServerTM, Mac OS XTM, UnixTM, LinuxTM, and FreeBSDTM.

Specifically, the training device may perform the model training method in the embodiment corresponding to FIG. 8 to obtain the target model.

An embodiment of this application further relates to a computer-readable storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or a terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

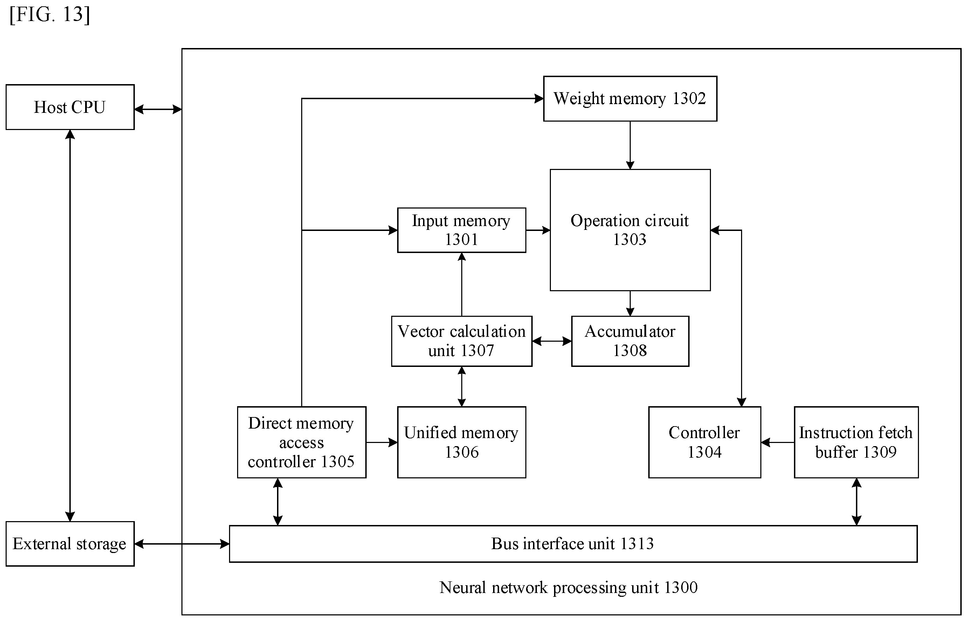

Specifically, FIG. 13 is a diagram of a structure of a chip according to an embodiment of this application. The chip may be represented as a neural network processing unit NPU 1300. The NPU 1300 is mounted to a host CPU (Host CPU) as a coprocessor. The host CPU allocates a task. A core part of the NPU is an operation circuit 1303. A controller 1304 controls the operation circuit 1303 to extract matrix data in a memory and perform a multiplication operation.

In some implementations, the operation circuit 1303 includes a plurality of process engines (Process Engines, PEs). In some implementations, the operation circuit 1303 is a two-dimensional systolic array. The operation circuit 1303 may alternatively be a one-dimensional systolic array or another electronic circuit capable of performing mathematical operations such as multiplication and addition. In some implementations, the operation circuit 1303 is a general-purpose matrix processor.

For example, it is assumed that there is an input matrix A, a weight matrix B, and an output matrix C. The operation circuit fetches data corresponding to the matrix B from a weight memory 1302, and buffers the data on each PE in the operation circuit. The operation circuit fetches data of the matrix A from an input memory 1301, performs a matrix operation on the data and the matrix B, and stores an obtained partial result or final result of the matrix in an accumulator (accumulator) 1308.

A unified memory 1306 is configured to store input data and output data. Weight data is directly transferred to the weight memory 1302 through a direct memory access controller (Direct Memory Access Controller, DMAC) 1305. Input data is also transferred to the unified memory 1306 through the DMAC.

A BIU is a bus interface unit, namely, a bus interface unit 1313, and is used for interaction between an AXI bus and the DMAC and between the AXI bus and an instruction fetch buffer (Instruction Fetch Buffer, IFB) 1309.

The bus interface unit (Bus Interface Unit, BIU for short) 1313 is used by the instruction fetch buffer 1309 to obtain instructions from an external memory, and is further used by the direct memory access controller 1305 to obtain original data of the input matrix A or the weight matrix B from the external memory.

The DMAC is mainly configured to transfer input data in the external memory DDR to the unified memory 1306, transfer the weight data to the weight memory 1302, or transfer input data to the input memory 1301.

A vector calculation unit 1307 includes a plurality of operation processing units; and if necessary, performs further processing such as vector multiplication, vector addition, an exponential operation, a logarithmic operation, or value comparison on an output of the operation circuit 1303. The vector calculation unit 1307 is mainly used for non-convolutional/ fully-connected layer network calculation in a neural network, such as batch normalization (batch normalization), pixel-level summation, and upsampling of a predicted label plane.

In some implementations, the vector calculation unit 1307 can store processed output vectors in the unified memory 1306. For example, the vector calculation unit 1307 may apply a linear function or a non-linear function to the output of the operation circuit 1303, for example, perform linear interpolation on a predicted label plane extracted from a convolutional layer, and for another example, obtain a vector of an accumulated value to generate an activation value. In some implementations, the vector calculation unit 1307 generates a normalized value, a value obtained through pixel-level summation, or both a normalized value and a value obtained through pixel-level summation. In some implementations, the processed output vector can be used as activated input to the operation circuit 1303, for example, the processed output vector can be used at a subsequent layer of the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one location, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (Solid-State Disk, SSD)), or the like.

**Claims**

**1.** An image processing method, wherein the method comprises:

obtaining a plurality of reference images and a first processing instruction for the plurality of reference images, wherein the first processing instruction indicates a target image;
adjusting the first processing instruction based on the plurality of reference images, to obtain a second processing instruction, wherein the second processing instruction indicates a relationship between at least one reference image in the plurality of reference images and the target image; and

processing the at least one reference image based on the second processing instruction by using a target model the to obtain the target image.

2. The method according to claim 1, wherein the method further comprises:

obtaining a plurality of reference texts, wherein the plurality of reference texts are used to describe the plurality of reference images; and

adjusting the first processing instruction based on the plurality of reference images, to obtain the second processing instruction comprises:

adjusting the first processing instruction based on the plurality of reference images and the plurality of reference texts, to obtain the second processing instruction.

3. The method according to claim 2, wherein obtaining the plurality of reference texts comprises:

obtaining the plurality of reference texts input by a user;

performing image recognition on the plurality of reference images to obtain the plurality of reference texts; or

performing text extraction on the first processing instruction to obtain the plurality of reference texts.

4. The method according to claim 2 or 3, wherein adjusting the first processing instruction based on the plurality of reference images and the plurality of reference texts, to obtain the second processing instruction comprises:

generating a plurality of third processing instructions and a plurality of new reference images based on the plurality of reference images and the plurality of reference texts, wherein one third processing instruction indicates a relationship between one reference image and one new reference image; and

adjusting the first processing instruction based on the plurality of reference images and the plurality of reference texts by using the plurality of third processing instructions as a reference, to obtain the second processing instruction, wherein the second processing instruction indicates a relationship between the plurality of reference images and the target image.

5. The method according to claim 4, wherein processing the at least one reference image based on the second processing instruction by using the target model, to obtain the target image comprises:
fusing the plurality of reference images based on the second processing instruction by using the target model and by using the plurality of third processing instructions and the plurality of new reference images as a reference, to obtain the target image.

6. The method according to claim 2 or 3, wherein the plurality of reference images comprise a first image, a second image, and a third image, the plurality of reference texts comprise a first text used to describe the first image, a second text used to describe the second image, and a third text used to describe the third image, and adjusting the first processing instruction based on the plurality of reference images and the plurality of reference texts, to obtain the second processing instruction comprises:

generating a fourth processing instruction and the second image based on the first image, the first text, and the second text, wherein the fourth processing instruction indicates a relationship between the first image and the second image; and

adjusting the first processing instruction based on the third image and the third text by using the fourth processing instruction as a reference, to obtain the second processing instruction, wherein the second processing instruction indicates a relationship between the third image and the target image.

7. The method according to claim 6, wherein processing the at least one reference image based on the second processing instruction by using the target model, to obtain the target image comprises:
converting the third image based on the second processing instruction by using the target model and by using the fourth processing instruction and the second image as a reference, to obtain the target image.

8. The method according to any one of claims 1 to 7, wherein the first processing instruction comprises a target text used to generate the target image, the target text comprises at least one reference text used to describe the at least one reference image, the second processing instruction comprises the target text and the at least one reference image embedded into the target text, and a location of embedding the at least one reference image is a location of the at least one reference text in the target text.

9. A model training method, wherein the method comprises:

obtaining a plurality of reference images and a first processing instruction for the plurality of reference images, wherein the first processing instruction indicates a target image;

adjusting the first processing instruction based on the plurality of reference images, to obtain a second processing instruction, wherein the second processing instruction indicates a relationship between at least one reference image in the plurality of reference images and the target image;

processing the at least one reference image based on the second processing instruction by using a to-be-trained model, to obtain the target image; and

training the to-be-trained model based on the target image and a real image, to obtain a target model, wherein the real image is obtained based on the at least one reference image.

10. The method according to claim 9, wherein the method further comprises:

obtaining a plurality of reference texts, wherein the plurality of reference texts are used to describe the plurality of reference images; and

adjusting the first processing instruction based on the plurality of reference images, to obtain the second processing instruction comprises:

adjusting the first processing instruction based on the plurality of reference images and the plurality of reference texts, to obtain the second processing instruction.

11. The method according to claim 10, wherein obtaining the plurality of reference texts comprises:

obtaining the plurality of reference texts input by a user;

performing image recognition on the plurality of reference images to obtain the plurality of reference texts; or

performing text extraction on the first processing instruction to obtain the plurality of reference texts.

12. The method according to claim 10 or 11, wherein adjusting the first processing instruction based on the plurality of reference images and the plurality of reference texts, to obtain the second processing instruction comprises:

generating a plurality of third processing instructions and a plurality of new reference images based on the plurality of reference images and the plurality of reference texts, wherein one third processing instruction indicates a relationship between one reference image and one new reference image; and

adjusting the first processing instruction based on the plurality of reference images and the plurality of reference texts by using the plurality of third processing instructions as a reference, to obtain the second processing instruction, wherein the second processing instruction indicates a relationship between the plurality of reference images and the target image.

13. The method according to claim 12, wherein processing the at least one reference image based on the second processing instruction by using the to-be-trained model, to obtain the target image comprises:

fusing the plurality of reference images based on the second processing instruction by using the to-be-trained model and by using the plurality of third processing instructions and the plurality of new reference images as a reference, to obtain the target image.

14. The method according to claim 10 or 11, wherein the plurality of reference images comprise a first image, a second image, and a third image, the plurality of reference texts comprise a first text used to describe the first image, a second text used to describe the second image, and a third text used to describe the third image, and adjusting the first processing instruction based on the plurality of reference images and the plurality of reference texts, to obtain the second processing instruction comprises:

generating a fourth processing instruction and the second image based on the first image, the first text, and the second text, wherein the fourth processing instruction indicates a relationship between the first image and the second image; and

adjusting the first processing instruction based on the third image and the third text by using the fourth processing instruction as a reference, to obtain the second processing instruction, wherein the second processing instruction indicates a relationship between the third image and the target image.

15. The method according to claim 14, wherein processing the at least one reference image based on the second processing instruction by using the to-be-trained model, to obtain the target image comprises:
converting the third image based on the second processing instruction by using the to-be-trained model and by using the fourth processing instruction and the second image as a reference, to obtain the target image.

16. The method according to any one of claims 9 to 15, wherein the first processing instruction comprises a target text used to generate the target image, the target text comprises at least one reference text used to describe the at least one reference image, the second processing instruction comprises the target text and the at least one reference image embedded into the target text, and a location of embedding the at least one reference image is a location of the at least one reference text in the target text.

17. An image processing apparatus, wherein the apparatus comprises:

an obtaining module, configured to obtain a plurality of reference images and a first processing instruction for the plurality of reference images, wherein the first processing instruction indicates a target image;
an adjustment module, configured to adjust the first processing instruction based on the plurality of reference images, to obtain a second processing instruction,
wherein the second processing instruction indicates a relationship between at least one reference image in the plurality of reference images and the target image; and
a processing module, configured to process the at least one reference image based on the second processing instruction by using a target model, to obtain the target image.

18. A model training apparatus, wherein the apparatus comprises:

an obtaining module, configured to obtain a plurality of reference images and a first processing instruction for the plurality of reference images, wherein the first processing instruction indicates a target image;
an adjustment module, configured to adjust the first processing instruction based on the plurality of reference images, to obtain a second processing instruction, wherein the second processing instruction indicates a relationship between at least one reference image in the plurality of reference images and the target image;
a processing module, configured to process the at least one reference image based on the second processing instruction by using a to-be-trained model, to obtain the target image; and
a training module, configured to train the to-be-trained model based on the target image and a real image, to obtain a target model, wherein the real image is obtained based on the at least one reference image.

19. An image processing apparatus, wherein the image processing apparatus comprises a memory and a processor, the memory stores code, the processor is configured to execute the code, and when the code is executed, the image processing apparatus performs the method according to any one of claims 1 to 16.

20. A computer storage medium, wherein the computer storage medium stores one or more instructions, and when the one or more instructions are executed by one or more computers, the one or more computers are enabled to perform the method according to any one of claims 1 to 16.

21. A computer program product, wherein the computer program product stores instructions, and when the instructions are executed by a computer, the computer is enabled to perform the method according to any one of claims 1 to 16.

[FIG. 1]

Intelligent information chain

Smart product and industry application

Translation/Text analysis/...    Voice/Vision/Image

Data

Data
processing:    Data training/Machine
learning/Deep learning    Searching/Inference/
Decision-making    ...

Infrastructure    Sensor    Intelligent chip    Basic platform    ...

IT
value
chain

[FIG. 2a]

Terminal device

Interaction interface

A plurality of reference images and a processing instruction

Target image

Memory

Processor

Data training/Machine learning/ Deep learning

Searching/ Inference/ Decision-making

...

Data processing device (server)

[FIG. 2b]

| User | User equipment |
|---|---|

13:21

Interaction interface

A plurality of reference images and a processing instruction

Target image

Memory

Processor

Data training/Machine learning/
Deep learning

Searching/
Inference/
Decision-making

...

User equipment

EP 4 760 471 A1

[FIG. 2c]

[FIG. 3]

Data collection device 160

Training sample

Database 130

Training device 120

100

Execution device 110

Client device 140

Reference picture

I/O interface 112

Model

Calculation module 111

Target image

Data storage system 150

EP 4 760 471 A1

[FIG. 4]

[FIG. 5]

| Obtain a plurality of reference images and a first processing instruction for the plurality of reference images, where the first processing instruction indicates a target image | 501 |

| Adjust the first processing instruction based on the plurality of reference images to obtain a second processing instruction, where the second processing instruction indicates a relationship between at least one reference image in the plurality of reference images and the target image | 502 |

| Process the at least one reference image based on the second processing instruction by using a target model, to obtain the target image | 503 |

[FIG. 6]

a city (city)

sea water (sea water)

a man (man)

Q: Generate an image with "A city in style of XXX, like
(Generate an image with a city in style of XXX, like)
" A:

Q: Generate an image with "The sea water, no wave, like
(Generate an image with sea water without waves, like)
" A:

Q: Generate an image with "A man stands on rocks, like
(Generate an image with a man standing on a rock, like)
" A:

Q: Generate an image with "A man, like <image3>, standing in sea that like
<image2>, and watching over the middle street of city like <image1>
(Generate an image with a man like <image3> standing in the sea like
<image2> and watching over a middle street of the city like <image1>)

Instruction processing module

Target image

[FIG. 7]

| 2D cap (2D cap) | |
| 3D cap (3D cap) | |
| 2D logo (2D logo) | |

Q : Transfer this 2D cap like    to 3D    A:
(Transfer this 2D cap like    to 3D)

Q: Transfer this 2D logo like    to 3D
(Transfer this 2D logo like    to 3D)

Instruction processing module

Target image

[FIG. 8]

Obtain a plurality of reference images and a first processing instruction for the plurality of reference images, where the first processing instruction indicates a target image — 801

Adjust the first processing instruction based on the plurality of reference images to obtain a second processing instruction, where the second processing instruction indicates a relationship between at least one reference image in the plurality of reference images and the target image — 802

Process the at least one reference image based on the second processing instruction by using a to-be-trained model, to obtain the target image — 803

Train the to-be-trained model based on the target image and a real image, to obtain a target model, where the real image is obtained based on the at least one reference image — 804

[FIG. 9]

Image processing apparatus

Obtaining module — 901

Adjustment module — 902

Processing module — 903

[FIG. 10]

Model training apparatus

Obtaining module — 1001

Adjustment module — 1002

Processing module — 1003

Training module — 1004

[FIG. 11]

— 1100

Execution device

Antenna

Antenna

Receiver 1101

Transmitter 1102

Processor 1103

Memory 1104

Application processor 11031

Communication processor 11032

[FIG. 12]

[FIG. 13]

Host CPU

External storage

Neural network processing unit 1300

Weight memory 1302

Operation circuit 1303

Accumulator 1308

Controller 1304

Instruction fetch buffer 1309

Input memory 1301

Vector calculation unit 1307

Unified memory 1306

Direct memory access controller 1305

Bus interface unit 1313

## INTERNATIONAL SEARCH REPORT

| International application No. |
| --- |
| **PCT/CN2024/110018** |

**A.    CLASSIFICATION OF SUBJECT MATTER**

G06F 3/04845(2022.01)i

According to International Patent Classification (IPC) or to both national classification and IPC

**B.    FIELDS SEARCHED**

Minimum documentation searched (classification system followed by classification symbols)

IPC：G06F

Documentation searched other than minimum documentation to the extent that such documents are included in the fields searched

Electronic data base consulted during the international search (name of data base and, where practicable, search terms used)

VEN, CNTXT, ENTXT, IEEE, CNKI, 百度, BAIDU, 必应, BING: 图像, 文本, 标签, 提示词, 提示文本, 提示内容, 调整, 优化, 生成模型, 目标图像, image, text, tag, prompt, adjustment, generation model, target image

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117149034 A (HUAWEI TECHNOLOGIES CO., LTD.) 01 December 2023 (2023-12-01) claims 1-21 | 1-21 |
| X | CN 116433825 A (BEIJING BAIDU NETCOM SCIENCE AND TECHNOLOGY CO., LTD.) 14 July 2023 (2023-07-14) description, paragraphs 40-192 and 254-256, and figure 1 | 1-3, 9-11, 17-21 |
| A | CN 108734754 A (BEIJING XIAOMI MOBILE SOFTWARE CO., LTD.) 02 November 2018 (2018-11-02) entire document | 1-21 |
| A | CN 113467735 A (HONOR DEVICE CO., LTD.) 01 October 2021 (2021-10-01) entire document | 1-21 |
| A | CN 116012492 A (TEZIGN (SHANGHAI) INFORMATION TECHNOLOGY CO., LTD.) 25 April 2023 (2023-04-25) entire document | 1-21 |
| A | WO 2022083536 A1 (HUAWEI TECHNOLOGIES CO., LTD.) 28 April 2022 (2022-04-28) entire document | 1-21 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 November 2024** | **12 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/110018**

| Patent document cited in search report | | | Publication date (day/month/year) | Patent family member(s) | | | Publication date (day/month/year) |
|---|---|---|---|---|---|---|---|
| CN | 117149034 | A | 01 December 2023 | None | | | |
| CN | 116433825 | A | 14 July 2023 | None | | | |
| CN | 108734754 | A | 02 November 2018 | None | | | |
| CN | 113467735 | A | 01 October 2021 | None | | | |
| CN | 116012492 | A | 25 April 2023 | None | | | |
| WO | 2022083536 | A1 | 28 April 2022 | CN | 112418392 | A | 26 February 2021 |

Form PCT/ISA/210 (patent family annex) (July 2022)

**REFERENCES CITED IN THE DESCRIPTION**

**Patent documents cited in the description**

- CN 202311012164